# EUROPEAN PATENT APPLICATION

(11) **EP 4 776 379 A1**
(43) Date of publication of application: **15.07.2026**
(21) Application number: 25227502.9
(22) Date of filing: 29.12.2025
(51) Int. Cl.: H01M 10/42, A01D 34/78, B25F 5/02, H02J 7/00, H01M 10/48, H01M 50/204, H01M 50/256, H02J 7/70, H02J 7/82, H01M 50/247

(54) **BATTERY FOR SUPPLYING ELECTRICAL POWER TO A WORK APPARATUS, AND A WORK APPARATUS COMPRISING SAID BATTERY**

(30) Priority: 30.12.2024 IT 202400030123
(71) Applicant: Stiga S.p.A., 31033 Castelfranco Veneto (TV) (IT)
(72) Inventor: D'AGOSTINI, Mauro, 35018 San Martino di Lupari (PD) (IT); MARTONE, Dario, 35138 Padova (PD) (IT); RIGONI, Mattia, 31015 Conegliano (TV) (IT); ZANOLIN, Alessandro, 35010 Trebaseleghe (PD) (IT); GARDIN, Matteo, 36060 Romano D'Ezzelino (VI) (IT)
(74) Representative: PGA S.p.A.

(57) **Abstract**

The present invention relates to a battery for electrically powering at least one piece of work equipment, said battery (1) comprising a casing (2), at least one rechargeable cell (3) in the casing and configured to generate electricity, a connector (30) configured to electrically connect the battery (1) to one or more external electrical components, a handle (25) constrained to the casing (2) and configured to allow a user to grip and transport the battery (1), a control panel (40) carried by the handle and comprising a visual indicator (42, 43) configured to give indications to a user regarding at least one parameter of the battery (1).

## Description

### FIELD OF THE INVENTION

The object of the present invention is a battery for powering work equipment as well as work equipment comprising said battery, usable in the domestic, professional or industrial field to perform maintenance and/or construction activities. In particular, the equipment which is the object of the present invention can comprise lawnmowers, edge trimmers, lawnmower tractors, chainsaws, blowers, autonomous navigation vehicles, and other devices usable for the maintenance of plots of land or gardens, such as the mowing of grass and the pruning of plants and the cleaning of environments. The equipment can comprise a work vehicle, for example for gardening, with an operator on board or autonomously driven, such as a lawnmower tractor. The work equipment can further comprise large vehicles, such as agricultural and industrial vehicles, for example forklifts.

### STATE OF THE ART

In the field of battery-powered equipment for garden maintenance, electrical connection systems between removable batteries and the equipment itself are known. Some examples of such connection systems are disclosed in the following documents.

Document WO2018094792A1 discloses a battery comprising a housing with electrical connectors arranged on an upper handle and configured to couple with corresponding connectors on the equipment.

Document EP2595466B1 discloses a battery-powered lawnmower comprising a first electrical connector of the battery configured to couple with a second electrical connector defined on the lawnmower. This coupling allows supplying electricity to the motor when the battery is installed in the lawnmower.

Further examples of connection systems for removable batteries are known from document EP2160937B1, which discloses a tiller provided with a battery having electrical connectors configured to couple with corresponding tiller connectors during installation.

Although the solutions disclosed above allow making removable electrical connections between batteries and garden equipment, the Applicant has noted that such solutions have limitations and drawbacks. In particular, the known systems do not guarantee adequate mechanical protection of the electrical connectors during battery handling, with a consequent risk of damaging them. The known solutions can therefore be improved in certain respects.

### OBJECT OF THE INVENTION

Therefore, the object of the present invention is to solve at least one of the drawbacks and/or limitations of the previous solutions.

A first object of the present invention is to provide an extremely compact battery, having reduced weight and dimensions, but at the same time reliable and able to maintain high performance over time, resisting demanding conditions of use. A further object of the present invention is to provide a battery having a robust structure but at the same time extremely easy to handle by the user. It is then an object of the present invention to provide an extremely safe battery capable of preventing unwanted overheating. Another object of the present invention is to provide a battery that is extremely flexible in its use, usable for different types of work equipment and capable of operating in a wide temperature range.

A further object of the present invention is to provide work equipment, for example for the maintenance of a garden, which is compact, robust and reliable.

These and other objects, which will appear more clearly from the following disclosure, are substantially achieved by a battery and work equipment in accordance with one or more of the appended claims.

### SUMMARY

In a 1st aspect, a battery (1) is provided for electrically powering at least one work equipment (100), said battery (1) comprising:
a casing (2) defining at least one compartment (V),
at least one cell (3), optionally of the rechargeable type, housed in the compartment (V) of the casing (2) and configured to generate electricity,
a plurality of electrical contacts configured to electrically connect the battery (1) to one or more external electrical components.

In a 2nd aspect according to the preceding aspect, the casing (2) comprises a heat sink (20). In a 3rd aspect according to the preceding aspect, the heat sink (20) is an integral part of the casing. In a 4th aspect according to the 2nd or 3rd aspect, the heat sink (20) is in one piece with the casing (2). In a 5th aspect according to any one of the 2nd to 4th aspects, the heat sink (20) defines at least a part of the casing (2).

In a 6th aspect according to any one of the 2nd to 5th aspects, the heat sink (20) defines at least a part of an outer surface of the casing (2).

In a 7th aspect according to any one of the 2nd to 6th aspects, the heat sink (20) is delimited by a perimeter edge, which in development (optionally lying) on an ideal plane, delimits a base surface, wherein the heat sink (20) defines an outer surface whose extension is greater than an extension of the base surface. In an 8th aspect according to the preceding aspect, the ratio of the area of the outer surface to the area of the base surface is greater than 1.2, optionally comprised between 1.5 and 7, even more optionally between 1.5 and 5.

In a 9th aspect according to any one of the 2nd to 8th aspects, the heat sink (20) comprises a lamellar heat sink. In a 10th aspect according to the preceding aspect, the slatted heat sink defines at least a part of the casing (2), optionally a part of a side wall of the casing (2).

In an 11th aspect according to any one of the 2nd to 10th aspects, the heat sink (20) comprises:
a base body (22) extending between a first and a second surface, wherein the first surface defines at least a portion of an inner surface of the casing (2),
a plurality of projections (21) emerging from the second surface of the base body (22) in the direction opposite the compartment (V).

In a 12th according to the preceding aspect, the second surface of the base body (22) together with the plurality of projections (21) define at least a part of an outer surface of the casing (2). In a 13th aspect according to the 11th or 12th aspect, the base body (22) has a plate-like structure. In a 14th aspect according to any one of the 11th to 13th aspects, each projection (21) of the heat sink has a substantially plate-like or lamellar structure. In a 15th aspect according to any one of the 11th to 14th aspects, the base body (22) has a thickness defined by the distance present between the first and the second surface. In a 16th aspect according to the preceding aspect, the thickness of the base body (22) is comprised between 2 and 7 mm, optionally between 2 and 5 mm. In a 16th-bis aspect according to any one of the 2nd to 16th aspects, the heat sink (20) is free of through openings, optionally configured to place the internal volume of the casing in fluid communication with the external environment. In a 16th-ter aspect according to any one of the 2nd to 16th-bis aspects, the heat sink base body (22) is free of through openings. In a 16th-quater aspect according to any one of the 2nd to 16th-ter aspects, the heat sink delimits at least part of the compartment V of the casing.

In a 17th aspect according to any one of the 11th to 16th aspects, the plurality of projections (21) extend in length along respective substantially parallel trajectories, optionally parallel to a lying plane of the base body (22). In an 18th aspect according to the preceding aspect, the trajectories of the plurality of projections (21) are straight. In a 19th aspect according to the 17th or 18th aspect, each projection has a length, measured along the respective extension direction, greater than 50 mm, optionally greater than 60 mm.

In a 20th aspect according to any one of the 2nd to 19th aspects, each projection of the heat sink extends in height starting from the base body (22) away from the compartment (V) of the casing, In a 21st according to the preceding aspect, the height of each projection (21) of the heat sink is greater than 0.9 mm, optionally comprised between 1 mm and 15 mm, even more optionally between 1 mm and 10 mm including the extremes, In a 22nd aspect according to any one of the preceding two aspects, the height of each projection can be constant or variable according to a development in length of the respective projection.

In a 23rd aspect according to any one of the 17th to 22nd aspects, each projection (21) has a predetermined width, measured orthogonally to the extension direction in length and orthogonally to a extension direction in height of the respective projection. In a 24th aspect according to the preceding aspect, the width of each projection is greater than 1.5 mm, optionally comprised between 1.7 mm and 7 mm. In a 25th aspect according to any one of the preceding two aspects, the width of each projection can be constant or variable along the extension in length of the respective projection. In a 26th aspect according to any one of the preceding three aspects, the width of each projection can be constant or variable along the extension in height of the respective projection. In a 27th aspect according to any one of the preceding four aspects, the width of each projection is constant according to an extension in height and variable according to an extension in length of the respective projection.

In a 28th aspect according to any one of the 23rd to 27th aspects, the ratio between the height and the width of a projection (21) is comprised between 0.3 and 6, optionally between 0.4 and 5. In a 29th aspect according to any one of the 23rd to 28th aspects, the ratio between the width of a projection (21) and the thickness of the base body (22) is comprised between 1 and 4, optionally between 1 and 3. In a 30th aspect according to any one of the preceding aspects, the casing (2) has a substantially parallelepiped shape, optionally a rectangular parallelepiped. In a 31st aspect according to any one of the preceding aspects, the casing (2) comprises at least one bottom wall (2a) and one front wall (2b) spaced apart from each other by at least one side wall (2c, 2d, 2e, 2f), In a 32nd aspect according to the preceding aspect, at least part of at least one of the bottom wall (2a) and the front wall (2b) is removable, configured to allow access to the compartment (V). In a 33rd aspect according to any one of the preceding aspects, the casing (2) is hermetically sealed. In a 33rd-bis aspect, the casing (2) is configured to prevent the ingress of water and/or dust into the compartment. In a 33rd-ter aspect according to any one of the preceding aspects, the casing (2) has a degree of protection equal to or higher than IP31, optionally equal to or higher than IP44, even more optionally equal to or higher than IP56.

In a 34th aspect according to any one of the 31st to 33rd-ter aspects, the heat sink (20) defines at least a part of at least one of: the bottom wall (2a), the front wall (2b) and the side wall (2c, 2d, 2e, 2f). In a 35th aspect according to any one of the 31st to 34th aspects, the heat sink (20) defines at least a part of the side wall and/or the bottom wall. In a 36th aspect according to any one of the 31st to 35th aspects, the heat sink is not defined on the removable wall of the casing (2).

In a 37th aspect according to any one of the 31st to 36th aspects, the at least one side wall comprises
a first side wall (2c) and a second side wall (2d) opposite to each other,
a third side wall (2e) and a fourth side wall (2f) opposite to each other.

In a 38th aspect according to the preceding aspect, the first and second side walls (2c, 2d) are spaced apart and connected to each other by means of the third and fourth side walls (2e, 2f). In a 39th aspect according to any one of the two preceding aspects, the third and fourth side walls (2e, 2f) are spaced apart and connected to each other by means of the first and second side walls (2c, 2d),

In a 40th aspect according to any one of the 37th to 39th aspects, the heat sink (20) defines at least part of at least one of the following walls of the casing: the third side wall, the fourth side wall, the bottom wall and the front wall. In a 41st aspect according to any one of the 37th to 40th aspects, the heat sink (20) defines at least part of at least one of the following walls of the casing: the fourth side wall (2f) and the bottom wall (2a).

In a 42nd aspect according to any one of the 37th to 41st aspects, the fourth side wall (2f) has a perimeter edge delimiting a first area, wherein the heat sink (20) defines a part of the fourth side wall (2f) and has a respective perimeter edge delimiting a second area, wherein the ratio between the second and the first area is greater than 0.5, optionally comprised between 0.6 and 1, even more optionally between 0.7 and 1. In a 43rd aspect according to any one of the 37th to 42nd aspects, the bottom wall (2a) has a perimeter edge delimiting a first area, wherein the heat sink (20) defines a wall of the bottom wall (2a) and has a respective perimeter edge delimiting a second area, wherein the ratio between the second area (optionally the area delimited by the perimeter edge of the heat sink on the bottom wall) and the first area (optionally the area of the perimeter edge delimiting the bottom wall) is greater than 0.5, optionally comprised between 0.6 and 1, even more optionally between 0.7 and 1.

In a 44th aspect according to any one of the 37th to 43rd aspects, the first and second side walls (2c, 2d) are connected to the third side wall (2e) by means of a connecting wall (2r). In a 45th aspect according to any one of the 37th to 44th aspects, the first and second side walls (2c, 2d) are connected to the fourth side wall (2f) by means of a chamfer wall (2m). In a 45th-bis aspect according to the preceding aspect, the chamfer wall connects two adjacent side walls. In a 45th-ter aspect according to any one of the preceding two aspects, the chamfer wall lies substantially on a plane which is inclined with respect to the lying planes of the immediately adjacent side walls and connected by said chamfer wall by an angle comprised between 30° and 60°, optionally comprised between 40° and 50°.

In a 46th aspect according to any one of the preceding aspects, the heat sink (20) is made at least in part of a material having, under the same conditions as the contour, a thermal conductivity higher than that of plastic materials. In a 47th aspect according to any one of the preceding aspects, a preponderant part of an outer surface of the casing (2), optionally at least 55%, even more optionally 65% of the outer surface of the casing (2), which comprises the heat sink (20) is made of a material having, under the same conditions as the contour, a thermal conductivity higher than that of plastic materials. In a 48th aspect according to any one of the preceding aspects, the heat sink (20) is made of a material having a thermal conductivity higher than 50 W/mK, optionally higher than 150 W/mK, even more optionally comprised between 170 W/mK and 450 W/mK. In a 49th aspect according to any one of the preceding aspects, a preponderant part of the casing (2), optionally at least 55%, even more optionally 65% of the casing (2), which comprises the heat sink (20) is made of a material having a thermal conductivity higher than 50 W/mK, optionally higher than 150 W/mK, even more optionally comprised between 170 W/mK and 450 W/mK. In a 50th aspect according to any one of the preceding aspects, the heat sink (20) is made of metal material. In a 51st aspect according to any one of the preceding aspects, the heat sink (20) is made of at least one of the following materials: aluminium, copper, steel, iron, a copper alloy, an aluminium alloy, a magnesium alloy. In a 52nd aspect according to any one of the preceding aspects, a preponderant part of the casing (2), optionally at least 55%, even more optionally 65% of the casing (2), which comprises the heat sink (20) is made of at least one of the following materials: aluminium, copper, steel, iron, a copper alloy, an aluminium alloy, a magnesium alloy.

In a 53rd aspect according to any one of the preceding aspects, at least the side wall of the casing (2) is of metal material, optionally aluminium, wherein said heat sink (20) defines at least part of said side wall of metal material. In a 54th aspect according to any one of the preceding aspects, at least the side wall (2c, 2d, 2e, 2f) and the bottom wall (2a) of the casing (2) are made of metal material, optionally aluminium, wherein said heat sink (20) defines at least part of said side wall and/or said bottom wall (2a) made of metal material. In a 55th aspect according to any one of the preceding aspects, the removable wall of the casing is at least partly made of plastic material. In a 56th aspect according to any one of the preceding aspects, the removable wall of the casing is at least partly made of plastic material. In a 57th aspect according to any one of the preceding aspects, the front wall (2b) of the casing (2) is made of plastic material.

In a 58th aspect according to any one of the preceding aspects, the casing (2) defines an internal volume, wherein the at least one cell (3) has a predetermined overall volume, wherein the ratio between the internal volume of the casing and the overall volume of the at least one cell is comprised between 1.05 and 1.2. In a 59th aspect according to any one of the preceding aspects, the at least one cell (3) is at least partly facing the bottom wall (2a) and/or the front wall (2b) of the casing (2). In a 60th aspect according to any one of the preceding aspects, the at least one cell comprises a plurality of cells (3) electrically connected to each other to define a group of cells.

In a 61st aspect according to any of the preceding aspects, the battery (1) comprises at least one control unit (50) housed in the casing (2). In a 62nd aspect according to the preceding aspect, the control unit (50) is connected, on one side, to the electrical contacts and, on the other side, to the at least one cell (3). In a 63rd aspect according to any one of the preceding two aspects, the control unit (50) is configured to electrically connect the electrical contacts with the at least one cell (3). In a 64th aspect according to any one of the preceding three aspects, the control unit (50) is configured to control the passage of electricity:
from the electrical contacts to the at least one cell (optionally the plurality of cells 3),
from the at least one cell (optionally the plurality of cells 3) to the electrical contacts.

In a 65th aspect according to any one of the preceding four aspects, the control unit (50) is interposed between the at least one cell (optionally the plurality of cells 3) and the side wall of the casing (2). In a 66th aspect according to any one of the preceding five aspects, the control unit (50) is interposed between the fourth side wall (2f) and the at least one cell (optionally the plurality of cells 3). In a 67th aspect according to any one of the preceding six aspects, the heat sink (20) defines at least a part of the casing (2) facing the control unit (50). In a 68th aspect according to any one of the preceding seven aspects, the heat sink (20) defines at least a part of the fourth side wall (2f) facing the control unit (50). In a 69th aspect according to any one of the preceding eight aspects, the heat sink (20) defines at least a part of the fourth side wall (2f) and the bottom wall (2b), both facing the control unit (50). In a 70th aspect according to any one of the preceding nine aspects, the heat sink (20) is configured to dissipate the heat which can be generated by the at least one cell and the control unit (50).

In a 71st aspect according to any one of the preceding ten aspects, the battery (1) comprises a support plate (52) interposed between the control unit (50) and at least a part of the heat sink (20). In a 72nd aspect according to the preceding aspect, the control unit (50) is directly carried by the support plate (52). In a 73rd aspect according to any one of the preceding two aspects, the support plate (52) is engaged to and directly in contact with the base body (22) of the heat sink (20).

In a 74th aspect according to any one of the preceding three aspects, the support plate (52) is made at least in part of a material having, under the same conditions as the contour, a thermal conductivity higher than that of plastic materials. In a 75th aspect according to any one of the preceding four aspects, the support plate (52) is made of a material having a thermal conductivity higher than 50 W/mK, optionally higher than 150 W/mK, even more optionally comprised between 170 W/mK and 450 W/mK. In a 76th aspect according to any one of the preceding five aspects, the support plate (53) is made of metal material. In a 77th aspect according to any one of the preceding six aspects, the support plate (52) is made of at least one of the following materials: aluminium, copper, steel, iron, a copper alloy, an aluminium alloy, a magnesium alloy. In a 78th aspect according to any one of the preceding seven aspects, the support plate (52) is made of the same material as the heat sink (20).

In a 79th aspect according to any of the 61st to 78th aspects, the control unit (50) comprises an electronic board (51) supporting a controller. In an 80th aspect according to the preceding aspect, the electronic board (51) is directly engaged with the base body of the heat sink (20) or is directly engaged with the support plate (52).

In an 81st aspect according to any one of the preceding aspects, the battery (1) comprises at least one handle (25) constrained to the casing (2). In an 82nd aspect according to the preceding aspect, the handle (25) is configured to allow a user to grasp and transport the battery (1). In an 83rd aspect according to any one of the preceding two aspects, the handle (25) is integrally attached to at least a part of the casing (2). In an 84th aspect according to any one of the preceding three aspects, the handle (25) is in a single piece with at least one of the side wall and the bottom wall (2a) of the casing. In an 85th aspect according to any one of the preceding four aspects, the handle (25), the bottom wall (2a) and the side wall of the casing define a single solid body. In an 86th aspect according to any one of the preceding five aspects, the handle (25) and the casing (2) define a single rigid body.

In an 87th aspect according to any one of the preceding six aspects, the handle (25) emerges from one/from the side wall (2f) of the casing (2). In an 88th aspect according to any one of the preceding two aspects, the handle (25) comprises
a gripping portion (25c) spaced apart from the casing (2),
at least one connecting portion that connects the gripping portion (25c) to the casing (2).

In an 88th-bis aspect according to the preceding aspect, the gripping portion (25c) and the at least one connecting portion are spaced apart from the side wall of the casing (2) defining a free space adapted to receive a hand of a user to hold the battery.

In an 88th-ter aspect according to the preceding aspect, the connector (30) is carried by the at least one handle connecting portion at an area spaced apart from the side wall of the casing and delimiting said free space.

In an 88th-quater aspect according to any one of the preceding two aspects, the heat sink (20) defines an area of the side wall (2f) of the casing (2) to which the handle (25) is fixed, which partially delimits the free space.

In an 88th-quinquies aspect according to any one of the preceding three aspects, the heat sink (20) is facing the free space.

In an 89th aspect according to any one of the preceding three aspects, the gripping portion (25c) is configured to allow a user to grasp the handle (25) for transporting the battery (1).

In a 90th aspect according to any one of the preceding four aspects, the at least one handle (25) connecting portion comprises a first connecting portion (25a) and a second connecting portion (25b). **In** a 91st aspect according to any one of the preceding five aspects, the gripping portion (25c) of the handle extends in length between a first and a second end portion opposite each other. In a 92nd aspect according to the preceding aspect
the first connecting portion (25a) joins the first end portion of the gripping portion (25c) with the casing (2),
the second connecting portion (25b) joins the second end portion of the gripping portion (25c) with the casing (2). In a 92nd-bis aspect according to any one of the preceding two aspects, the at least one handle (25) connecting portion comprises a first connecting portion (25a) and a second connecting portion (25b) that respectively connect opposite ends of the gripping portion (25c) to the casing (2).

In a 92nd-ter aspect according to any one of the preceding two aspects, the first and/or second connecting portion (25a, 25b) comprises an outer surface which is inclined with respect to at least one, optionally both, of a surface of the side wall of the casing (2) to which the handle (25) is engaged and the gripping portion (25c) of the handle (25).

In a 92nd-quater aspect according to the preceding aspect, the outer surface of each of the first and second connecting portions (25a, 25b) is substantially flat.

In a 92nd-quinquies aspect according to any one of the preceding 88th to 92nd-quater aspects, the gripping portion (25c) has a respective substantially flat outer surface.

In a 92nd-sexies aspect according to the preceding two aspects, the outer surface of the gripping portion (25c) is inclined with respect to at least one, optionally both, of the outer surfaces of the first and second connecting portions (25a, 25b), by a same angle comprised between 30° and 60°, optionally comprised between 40° and 50°, still more optionally equal to 45°.

In a 93rd aspect according to any one of the 88th to 92nd-sexies aspects, the gripping portion (25c) of the handle extends in length between a first and a second end portion along an extension direction. In a 94th aspect according to the preceding aspect, the extension direction of the gripping portion (25c) of the handle (25) is substantially parallel to a part of the side wall of the casing (2). In a 95th aspect according to any one of the preceding two aspects, the fourth side wall (2f) of the casing (2) extends substantially along an ideal development plane, wherein the extension direction of the gripping portion (25c) is substantially parallel to said ideal development plane of the fourth side wall (2f) of the casing (2).

In a 95th-bis aspect according to the preceding aspect, the surface of the side wall of the casing (2) is inclined with respect to at least one, optionally both, of the outer surfaces of the first and second connecting portions (25a, 25b), by a same angle comprised between 30° and 60°, optionally comprised between 40° and 50°, even more optionally equal to 45°.

In a 96th aspect according to any one of the 88th to 95th-bis aspects, the distance between the gripping portion (25c) of the handle (25) and the casing (2) is fixed.

In a 97th aspect according to any one of the 81st to 96th aspects, the handle (25) comprises a hollow body. In a 98th aspect according to the preceding aspect, the hollow body of the handle (25) has an internal volume in fluid communication with the casing compartment, optionally with the internal volume of the casing (2).

In a 99th aspect according to any one of the 90th to 98th aspects, the handle (25) has an inner surface facing the compartment (V) of the casing (2) and an opposite outer surface, opposite to said outer surface. In a 99th-bis aspect according to the preceding aspect, at least a part of the outer surface of at least one of the first and second connecting portions (25a, 25b) of the handle (25) is inclined with respect to a portion of the side wall of the casing (2) directly facing the gripping portion (25c). In a 99th-ter aspect according to the preceding aspect, the outer surface of the handle (25) faces away from the compartment (V) of the casing (2). In a 100th aspect according to any one of the 90th to 99th-ter aspects, the side wall portion of the casing (2) directly facing the gripping portion (25c) of the handle (25) lies substantially on an ideal plane, wherein at least a part (optionally all) of the outer surface defined by the first connecting portion (25a) is inclined with respect to said ideal plane of the side wall portion of the casing (2) directly facing the gripping portion (25c). In a 101st aspect according to the preceding aspect, the first connecting portion (25a) extends from the side wall portion of the casing (2) directly facing the gripping portion (25c) according to a direction exiting from the compartment (V) of the casing (2). In a 102nd aspect according to any one of the preceding two aspects, the first connecting portion (25a) extends from the side wall portion of the casing (2) directly facing the gripping portion (25c) substantially approaching with respect to the second connecting portion (25b). In a 103rd aspect according to any one of the 99th to 102nd aspects, the side wall portion directly facing the gripping portion (25c) is defined by at least a part of the fourth side wall (2f).

In a 104th aspect according to any one of the 99th to 103rd aspects, at least the outer surface of the first connecting portion (25a) is inclined with respect to said ideal plane (optionally to the lying plane of the fourth side wall 2f) by an acute angle. In a 105th aspect according to any one of the 99th to 104th aspects, at least the outer surface of the first connecting portion (25a) is inclined with respect to said ideal plane (optionally to the lying plane of the fourth side wall 2f) by an angle comprised between 30° and 60°, optionally between 40° and 50°, still more optionally substantially equal to 45°. In a 106th aspect according to any one of the preceding two aspects, said angle is subtended between the side wall portion directly facing the gripping portion (25c) of the handle and said outer surface of the first connecting portion (25a).

In a 107th aspect according to any one of the 99th to 106th aspects, the entire first connecting portion (25a) is inclined with respect to the side wall portion directly facing the gripping portion (25c), optionally with respect to the fourth side wall (2f) of the casing (2).

In a 108th aspect according to any one of the 99th to 107th aspects, the outer surface defined by the first connecting portion (25a) lies substantially on a plane. In a 109th aspect according to any one of the 99th to 108th aspects, the outer surface defined by the gripping portion (25c) of the handle lies substantially on a plane substantially parallel to a lying plane of the side wall portion of the casing (2) directly facing said gripping portion (25c). In a 110th aspect according to any one of the preceding aspects, at least a part of the outer surface of the second connecting portion (25b) lies on a plane substantially parallel to the lying plane of the outer surface of the gripping portion (25c), optionally it lies on the same lying plane of the outer surface of the gripping portion.

In a 110th-bis aspect according to any one of the preceding 81st to 110th aspects, the casing (2) comprises a bottom wall (2a) extending transversely with respect to the side wall (2f) of the casing (2) to which the handle (25) is engaged. In a 110th-ter aspect according to the preceding aspect, the heat sink (20) defines at least part of an area of the bottom wall (2a) of the casing (2).

In a 110th-quater aspect according to any one of the preceding two aspects, the plurality of projections (21) comprises:
- a first plurality of projections (21a) carried by the side wall (2f) of the casing (2),
- a second plurality of projections (21b) carried by the bottom wall (2a).

In a 110th-quinquies aspect according to the preceding aspect, each projection of the first plurality of projections (21a) is connected to a respective projection of the second plurality of projections (21b) by a connecting section (21c).

In a 110th-sexies aspect according to any one of the preceding two aspects, the first plurality of projections (21a) has larger dimensions with respect to the second plurality of projections (21b).

In a 110th-septies aspect according to any one of the preceding three aspects, the first plurality of projections (21a) has a height greater than a height of the second plurality of projections (21b), optionally wherein a ratio between the height of the first plurality of projections (21a) and the height of the second plurality of projections (21b) is comprised between 4 and 8, optionally comprised between 5 and 7.

In a 110th-octies aspect according to the preceding aspect, the height of the first plurality of projections (21a) is measured orthogonally with respect to the side wall (2f) of the casing (2).

In a 110th-novies aspect according to any one of the preceding two aspects, the height of the second plurality of projections (21b) is measured orthogonally with respect to the bottom wall (2a) of the casing (2).

In a 110th-decies aspect according to any one of the preceding six aspects, the first plurality of projections (21a) has a width equal to a respective width of the second plurality of projections (21b) to less than a difference of 10%.

In a 110th-undecies aspect according to the preceding aspect, the width of the first plurality of projections (21a) is measured parallel to the side wall (2f) of the casing (2).

In a 110th-duodecies aspect according to any one of the preceding two aspects, the width of the second plurality of projections (21b) is measured parallel to the bottom wall (2a) of the casing (2).

In a 110th-terdecies aspect according to any one of the preceding aspects, the battery comprises an interconnecting structure of the cells (3) configured to electrically connect the cells (3) to each other,
wherein the interconnecting structure is located in the compartment (V) of the casing (2) near one/the bottom wall (2a) of the casing (2).

In a 110th-quattuordecies aspect according to the preceding aspect, the interconnecting structure is constrained to the second plurality of projections (21b) to allow the dissipation of heat generated by the interconnecting structure.

In a 110th-quindecies aspect according to any one of the preceding aspects, each projection of the first plurality of projections (21a) has an end surface which is coplanar with an area of the side wall (2f) of the casing (2) not occupied by the heat sink (20).

In a 110th-sexdecies aspect according to any one of the preceding aspects, each projection of the second plurality of projections (21b) has an end surface which is coplanar with an area of the bottom wall (2a) of the casing (2) not occupied by the heat sink (20).

In a 110th-septendecies aspect according to any one of the preceding aspects, the control unit (50) is constrained to one or more projections of the first plurality of projections (21a) to allow the dissipation of heat generated by the control unit (50).

In a 111th aspect according to any one of the preceding aspects the battery 1 comprises a connector (30) including the plurality of electrical contacts. In a 111th-bis aspect according to the preceding aspect, the connector (30) is configured to electrically connect the battery (1) to one or more external electrical components. In a 111th-ter aspect according to any one of the preceding two aspects, the connector (30) comprises an electrically insulating body carrying the plurality of electrical contacts. In a 111th-quater aspect according to any one of the preceding three aspects, the connector (30) is of the interlocking type, optionally configured to engage and electrically connect to a respective electrical connector of an external component. In a 111th-quiques aspect according to any one of the preceding four aspects, the plurality of contacts, optionally the connector (30), is carried by at least one of the handle (25) and the casing (2). In a 112th aspect according to any one of the 88th to 111th aspects, the plurality of contacts, optionally the connector (30), is carried by at least one of the gripping portion (25c) and the at least one connecting portion. In a 113th aspect according to any one of the 90th to 112th aspects, the plurality of contacts, optionally the connector (30), is carried by the first connecting portion (25a).

In a 114th aspect according to any one of the 111th to 113th aspects, the connector (30) is carried by the inclined outer surface of the first connecting portion (25a). In a 115th aspect according to any one of the 111th to 114th aspects, the outer surface of the first connecting portion (25a) has a through access that places an internal volume of the handle (25) in fluid communication with the external environment, wherein the connector (30) is engaged at least in part in said through access.

In a 115th-bis aspect according to any one of the 45th to 115th aspects, the contacts, optionally the connector (30), is carried by at least one chamfer wall (2m) of the casing (2).

In a 116th aspect according to any one of the 111th to 115th-bis aspects, the connector (30) is configured to engage a respective connector of a cable for the electrical connection of the at least one cell (optionally the plurality of cells 3) with work equipment (100) and/or a charging system for the battery (1). In a 117th aspect according to any one of the 97th to 116th aspects, the connector comprises a positive pole (P) and a negative pole (M) connected by respective cables to a positive pole and a negative pole of the control unit. In a 118th according to the preceding aspect, the cables connecting the poles of the connector to the poles of the control unit are located at least in part in the hollow body of the handle and in part in the casing.

In a 119th aspect according to any one of the 81st to 118th aspects, the handle (25) comprises at least one protection flap emerging substantially to the side of the connector (30). In a 120th aspect according to the preceding aspect, the protection flap is configured to protect the connector from any impacts.

In a 121st aspect according to any one of the preceding two aspects, the protection flap emerges in height from the outer surface of the handle (25) carrying (optionally directly) the connector at least up to a top portion of the connector (30). In a 122nd aspect according to any one of the preceding three aspects, the protection flap emerges from the handle (25) along a direction substantially orthogonal to the outer surface of the handle (25). In a 123rd aspect according to any one of the preceding four aspects, the protection flap is integrally attached to the hollow body of the handle (25). In a 124th aspect according to any one of the preceding five aspects, the protection flap has a width substantially equal to a width of the outer surface of the handle (25).

In a 125th aspect according to any one of the preceding six aspects, the protection flap emerges from the outer surface of the first connecting portion (25a), on the side of the connector (30). In a 126th aspect according to any one of the preceding seven aspects, the protection flap is made of metallic material, optionally of the same material as the handle (25).

In a 127th aspect according to any one of the preceding eight aspects, the at least one protection flap comprises a first and a second protection flap (26, 27). In a 128th aspect according to the preceding aspect, the first and second protection flaps (26, 27) are placed on the side of the connector (30). In a 129th aspect according to any one of the preceding two aspects, the connector (30) is interposed between the first and second protection flaps (26, 27).

In a 129th-bis aspect according to any one of the preceding three aspects, the first and second protection flaps (26, 27) are mutually spaced apart and define one or more lateral accesses configured to allow a user to laterally contact the connector (30).

In a 129th-ter aspect according to any one of the preceding four aspects, the first and second protection flaps (26, 27) emerge transversely, optionally orthogonally, with respect to the outer surface of the first connecting portion (25a) of the handle (25).

In a 129th-quater aspect according to any one of the preceding five aspects, each of the first and second protection flaps (26, 27) lies on respective planes parallel to each other.

In a 129th-quinquies aspect according to any one of the preceding aspects, the first connecting portion (25a) of the handle (25) has an elongated body extending along a development direction (X) transverse to the gripping portion (25c) of the handle (25) and/or to the side wall of the casing (2).

In a 129th-sexies aspect according to the preceding aspect, each of the first and second protection flaps (26, 27) extends transversely, optionally orthogonally, to the development direction (X) of the elongated body of the first connecting portion (25a).

In a 129th-septies aspect according to any one of the preceding two aspects, the first and second protection flaps (26, 27) have a same width equal to or greater than a width of the outer surface of the handle (25), wherein the width of the first and second protection flaps and the width of the outer surface of the handle (25) are measured along a lateral direction (L) that is parallel to the outer surface of the handle and transverse to the development direction (X) of the elongated body of the first connecting portion (25a).

In a 129th-octies aspect according to the preceding aspect, the width of each of the first and second protection flaps is greater than an overall width of the connector (30) measured parallel to the lateral direction (L).

In a 129th-novies aspect according to the preceding aspect, a ratio between the width of the first and second protection flaps and the overall width of the connector (30) is comprised between 1.05 and 1.5, optionally comprised between 1.1 and 1.3.

In a 129th-decies aspect according to any one of the preceding 127th to 129th-novies aspects, the at least one protection flap, optionally the first and the second protection flaps, surround less than 70%, optionally less than 50%, of a perimeter of the connector (30) measured on a plane parallel to the outer surface of the first connecting portion (25a) of the handle (25).

In a 130th aspect according to any one of the preceding aspects, the battery (1) comprises at least one control panel (40). In a 131st aspect according to the preceding aspect, the control panel (40) is connected to the control unit (50). In a 132nd aspect according to any one of the preceding two aspects, the control panel (40) comprises at least one visual indicator (42, 43) configured to give indications to a user regarding at least one parameter of the battery (1). In a 133rd aspect according to the preceding aspect, the visual indicator comprises at least one of: one or more LEDs, an analogue display, a digital display. In a 134th aspect according to any one of the preceding four aspects, the control unit (50) is connected to the at least one cell (optionally to the plurality of cells 3) and configured to:
receive at least one input signal from the at least one cell (optionally from the plurality of cells 3 or groups of the plurality of cells 3), representative of at least one battery charge parameter,
determine at least one value of the battery charge parameter,
generate at least one command signal as a function of a determined charge parameter value,
send said command signal to the visual indicator (42, 43), which is configured to provide the user, as a function of the received command signal, with a visual representation of the charge level of the battery (1).

In a 135th aspect according to any one of the 132nd to 134th aspects, the visual indicator comprises a plurality of LEDs. In a 136th aspect according to the preceding aspect, the command signal emitted by the control unit (50) is configured to allow the lighting of a predetermined number of LEDs as a function of the value of the charge parameter determined by the control unit (50). In a 137th aspect according to any one of the preceding 134th to 136th aspects, the control unit (50) is configured to:
receive at least one input signal from the at least one cell (optionally from the plurality of cells 3 or groups of the plurality of cells 3), representative of at least one battery charge parameter,
estimate at least one value of the battery charge parameter,
compare the estimated value of the charge parameter with one or more threshold parameters,
generate at least one command signal as a function of the comparison with said two or more thresholds,
send said command signal to the visual indicator (42, 43), which is configured to provide the user, as a function of the received command signal, with a visual representation of the charge level of the battery (1).

In a 138th aspect according to any one of the 134th to 137th aspects, the charge parameter comprises at least one of: a voltage of the at least one cell, an average voltage of the plurality of cells, a voltage of a group of cells of the plurality of cells, an average voltage of two or more groups of cells of the plurality of cells.

In a 139th aspect according to any one of the 130th to 138th aspects, the control unit (50) is connected to the at least one cell (optionally to the plurality of cells 3) and configured to:
receive at least one input signal from the at least one cell (optionally from the plurality of cells 3 or groups of the plurality of cells 3), representative of at least one battery error parameter,
determine at least one value of the battery error parameter representative of an anomaly of the battery,
generate at least one command signal as a function of a determined error parameter value,
send said command signal to the visual indicator (42, 43), which is configured to provide the user, as a function of the received command signal, with a visual representation of the type of error determined by the control unit.

In a 140th aspect according to the preceding aspect, the command signal emitted by the control unit (50) is configured to allow the lighting of a predetermined number of LEDs of the visual indicator, as a function of the value of the error parameter determined by the control unit (50). In a 141st aspect according to any one of the preceding 130th to 140th aspect, the control unit (50) is configured to:
receive at least one input signal from the at least one cell (optionally from the plurality of cells 3 or groups of the plurality of cells 3), representative of at least one battery charge parameter,
estimate at least one value of the battery error parameter,
compare the estimated value of the error parameter with at least one threshold value,
generate at least one command signal as a function of the comparison with said threshold,
send said command signal to the visual indicator, which is configured to provide the user, as a function of the received command signal, with a visual representation of the error type of the battery (1).

In a 142nd aspect according to any one of the 130th to 141st aspects, the error parameter comprises at least one of: a voltage of the at least one cell, an average voltage of the plurality of cells, a voltage of a group of cells of the plurality of cells, an average voltage of two or more groups of cells of the plurality of cells, a current of the at least one cell (optionally of the plurality of cells), a temperature inside the at least one cell, a temperature inside the casing, a charge state of the battery.

In a 143rd aspect according to any one of the 130th to 142nd aspect, the visual indicator comprises a first visual indicator (42) and a second visual indicator (43). In a 144th aspect according to the preceding aspect, the control unit (50) is configured to:
send a command signal to the first visual indicator (42) as a function of the comparison of the estimated value of the charge parameter with said two or more thresholds,
send a command signal to the first and/or second visual indicator (42, 43) as a function of the comparison of the estimated value of the error parameter with said threshold.

In a 145th aspect according to any one of the 132nd to 144th aspects, the visual indicator comprises a number of LEDs comprised between 2 and 6, optionally comprised between 3 and 5, even more optionally equal to 4. In a 146th aspect according to any one of the 132nd to 145th aspects, the first visual indicator comprises a number of LEDs comprised between 2 and 6, optionally comprised between 3 and 5, even more optionally equal to 4. In a 147th aspect according to any one of the 132nd to 146th aspects, the visual indicator comprises a number of LEDs comprised between 2 and 6, optionally comprised between 3 and 5, even more optionally equal to 4.

In a 148th aspect according to any one of the 130th to 147th aspects, the control panel (40) comprises at least one button (41).

In a 148th-bis aspect according to the preceding aspect, the button (41) and the visual indicator (42, 43) are aligned along a longitudinal axis (Y) of the gripping portion (25c), said longitudinal axis (Y) of the gripping portion (25c) being a centreline axis that divides the gripping portion (25c) into two substantially symmetrical halves,
optionally wherein the longitudinal axis (Y) of the gripping portion (25c) is coplanar with the outer surface of the gripping portion (25c).

The alignment of the button and visual indicator along the longitudinal symmetry plane facilitates the intuitive operation of the controls by the user regardless of the use of the right or left hand, improving ergonomics and reducing the risk of accidental actuations during battery transport.

In a 148th-ter aspect according to any one of the preceding two aspects, the button (41) is configured to allow the user to send a request signal to the control unit (50), wherein the control unit is configured to:
receive the request signal from the button (41),
send said command signal to the visual indicator following the reception of the request signal.

In a 149th aspect according to any one of the 130th to 148th-ter aspects, the control panel (40) is carried by at least one of the handle (25) and the casing (2). In a 149th-bis aspect according to the preceding aspect, the control panel is defined at least in part on the handle (25) and/or on a part of the casing (2) located near the handle (25). In a 149th-ter aspect according to any one of the preceding two aspects, the control panel (40) is defined on the gripping portion (25c) and/or on a portion of the casing (2) located near said gripping portion (25c). In a 150th aspect according to any one of the 130th to 149th-quater aspects, the control panel (40) is carried by at least one of the gripping portion (25c) and the at least one connecting portion. In a 151st aspect according to any one of the 130th to 150th aspects, the control panel (40) is carried by the gripping portion and/or the second connecting portion (25b).

In a 152nd aspect according to any one of the 130th to 151st aspects, the control panel (40) is carried by the outer surface of the gripping portion (25c) and/or by the second connecting portion (25b). In a 153rd aspect according to any one of the 130th to 152nd aspects, the outer surface of the handle (25) carrying the control panel (40) has a through access that places an internal volume of the handle (25) in fluid communication with the external environment, wherein the control panel (40) is engaged at least in part in said through access.

In a 154th aspect according to any one of the 130th to 153rd aspects, the control panel (40) is connected to the control unit (50) by means of one or more cables which are placed at least in part in the hollow body of the handle (25) and in part in the casing (2). In a 155th aspect according to any one of the 130th to 154th aspects, the control panel (40) is opposite to the connector (30), with respect to the gripping portion (25c) of the handle. In a 156th aspect according to any one of the 130th to 155th aspects, the connector (30) is arranged on the first connecting portion (25a) of the handle (25) while the control panel (40) is arranged on the second connecting portion (25b) of the handle (25).

In a 156th-bis aspect according to any one of the 149th to 156th aspects, the control panel (40) has a minimum distance from the gripping portion (25c) of the handle (25) of less than 10 cm, optionally less than 7 cm. In a 156th-ter aspect according to any one of the 149th to 156th-bis aspects, the control panel (40) lies flat (optionally defined by the handle or by a part of the casing) having a minimum distance from an intermediate lying plane of the gripping portion of less than 10 cm, optionally less than 7 cm. In a 156th-quater aspect according to the preceding aspect, the lying plane of the control panel (40) is substantially parallel to the intermediate lying plane of the gripping portion (25c) of the handle. In a 156th-quinquinies aspect according to the preceding 130th to 156th-quater aspects, the control panel (40) is positioned at one end of the handle (25).

In a 156th-sexies aspect according to any one of the 130th to 156th-quinquies aspects, the control panel (40) is carried by the second connecting portion (25b) of the handle (25) and is coplanar with an outer surface of the gripping portion (25c), wherein the outer surface of the gripping portion (25c) is substantially flat.

The coplanar arrangement of the control panel with the outer surface of the gripping portion allows the user to easily view the information while gripping the handle, maintaining a natural posture of the hand without the need to rotate the wrist or change the grip to read the display.

In a 156th-septies aspect according to any one of the 130th to 156th-sexies aspects, the control panel (40) has an elongated shape extending along the second connecting portion (25b) starting from one end of the gripping portion (25c).

The extension of the control panel from the second end portion along the second connecting portion allows to position the panel components (buttons, display) in an area easily accessible by the user's thumb during gripping, optimizing ergonomics and reducing the need to change grips to operate the controls.

In a 156th-octies aspect according to any one of the preceding 130th to 156th-septies aspects, the control panel (40) has a width, measured transversely, optionally orthogonally, with respect to a longitudinal axis (Y) of the gripping portion (25c), equal to a width of the gripping portion (25c) measured transversely to the longitudinal axis (Y) of the gripping portion (25c), to less than a difference of 10%,
wherein the longitudinal axis of the gripping portion (25c) is a centreline axis that divides the gripping portion (25c) into two substantially symmetrical halves,
optionally wherein the longitudinal axis (Y) of the gripping portion (25c) is coplanar with the outer surface of the gripping portion (25c).

In a 157th aspect according to any one of the preceding aspects, the at least one cell (3) is of the lithium-ion type. In a 158th aspect according to any one of the preceding aspects, the at least one cell comprises a plurality of electrochemical cells (3) housed in the casing (2) and configured to convert chemical energy into electrical energy. In a 159th according to the preceding aspect, the plurality of electrochemical cells (3) is divided into two or more groups, each of which comprises cells aligned along respective development axes (X) parallel to each other,
wherein the battery (1) further comprises an electrical connection component connected to each group of electrochemical cells and to the control unit (50), configured to transfer electric current coming from the groups of cells to the control unit (50). In a 160th according to the preceding aspect, the electrical connection component comprises two or more terminals, each connected to a respective group of electrochemical cells for partitioning the flow of electric current directed towards the control unit (50). In a 161st aspect according to any one of the preceding two aspects, the electrochemical cells (3) of each group are electrically connected in series. In a 162nd aspect according to any one of the preceding four aspects, the plurality of cells comprises a number of cells greater than 50, optionally comprised between 70 and 150 cells, even more optionally comprised between 80 and 130 cells. In a 163rd aspect in accordance with any one of the 158th to 162nd aspects, the plurality of cells (3) is organized with a matrix structure.

In a 164th aspect according to any one of the 158th to 163rd aspects, the electrochemical cells (3) of said plurality are configured to generate an overall potential difference comprised between 10V and 60V, optionally equal to 24V, 48V or 56V.

In a 165th aspect according to any one of the 158th to 164th aspects, the electrochemical cells (3) of said plurality are configured to deliver an electric current having intensity greater than 15A/h, optionally comprised between 20 A/h and 50a/h, even more optionally comprised between 25A/h and 45A/h.

In a 166th aspect according to any one of the 158th to 165th aspects, the electrochemical cells (3) of said plurality are configured to generate a power comprised between 360 W and 2.52 kW, optionally comprised between 800 W and 2.24 kW, even more optionally equal to 1.7 kW.

In a 167th aspect according to any one of the preceding aspects, the battery (1) has an overall weight of less than 25 Kg, optionally less than 18 Kg, even more optionally comprised between 5 and 15 Kg.

In a 168th aspect, work equipment (100) is provided, optionally for the maintenance of a plot of land or garden, said work equipment (100) comprising:
a frame (101),
a tool (102) carried by the frame (101),
at least one electric actuator (103) configured to activate the tool (102),
a battery (1) carried by the frame (101) and configured to electrically power at least the electric actuator (103).

In a 169th aspect according to the preceding aspect, the battery (1) is in accordance with any one of the preceding aspects. In a 170th aspect according to any one of the preceding two aspects, the work equipment (100) comprises one and only one battery (1).

In a 171st aspect according to any one of the 168th to 170th aspects, the work equipment comprises a vehicle for the maintenance of land, in particular for mowing lawns or gardens. In a 172nd aspect according to the preceding aspect, the vehicle comprises:
a support frame (101),
a driving station (106) for an operator carried by the support frame (101),
at least one work tool (102) carried, optionally below, by said support frame (101) and configured to perform work on land to be maintained,
at least one command device (108), that can be operated by the operator in said driving station (106), to cause a movement of the vehicle,
at least one traction member, optionally a right traction member (109a) and a left traction member (109b) carried by the support frame (101) and intended for the transmission of traction to the ground,
at least one electric motor (105) coupled to the traction member, optionally to the right (109a) and left (109b) traction member,
at least one battery (1) in accordance with any one of the preceding aspects, configured to electrically power said electric motor (105).

In a 173rd aspect according to the 171st or 172nd aspect, the equipment, optionally the vehicle, comprises at least one of:
a front compartment (107a) carried by the support frame (101) and located in front of the driving station (106), said front compartment (107a) defining a compartment for housing at least one battery (1),
a rear compartment (107b) carried by the support frame (101) and located to the rear of the driving station (106), said rear compartment (107b) defining a compartment for housing at least one battery (1).

In a 174th aspect, a use of a battery in accordance with any one of the preceding aspects is provided, for electrically powering work equipment (100). In a 175th aspect according to the preceding aspect, the work equipment (100) comprises at least one of: a lawnmower, an edge trimmer, a lawnmower tractor, grass mowing vehicles, plant pruning vehicles. In a 176th aspect according to the 174th or 175th aspect, the work equipment (100) comprises a vehicle with an operator on board.

### BRIEF DESCRIPTION OF THE DRAWINGS

Some embodiments and aspects of the invention will be disclosed hereinafter with reference to the accompanying drawings, given merely for illustrative, non-limiting purposes in which:
- Figures 1 and 2 are perspective views of a battery object of the present invention;
- Figure 3 is a detailed view of a control panel of a battery defined on a handle of the casing;
- Figure 4 is a side view of the battery of Figure 1;
- Figure 5 is a further detail view showing a connector of a battery to which an electrical cable is engaged;
- Figures 6 and 7 are perspective views of the battery of Figure 1 in which a side wall of the casing has been removed, for purely illustrative purposes;
- Figure 8 is a sectional view of the battery of Figure 1;
- Figures 9-11 are further detail sectional views of a battery in accordance with the present invention;
- Figure 12 is an exploded view of a battery in accordance with the present invention;
- Figure 13 is a view of a further battery in accordance with the present invention;
- Figures 14 and 15 schematically show work equipment comprising at least one battery in accordance with the present invention.

### DEFINITIONS AND CONVENTIONS

It should be noted that in the present detailed description, corresponding parts illustrated in the various Figures are indicated with the same numerical references. The Figures could illustrate the object of the invention through non-scale depictions; therefore, the parts and components illustrated in the Figures related to the object of the invention could exclusively relate to schematic depictions.

The term *"work equipment"* means an instrument or tool that can be used by a user to carry out work in a domestic and/or professional environment. For example, the work equipment can comprise a vehicle for the maintenance of gardens.

The battery 1 and/or the work equipment 100 object of the present invention can comprise at least one control unit, indicated with reference numeral 50 in the attached drawings. The control unit is responsible for checking the operating conditions put in place by the battery and/or equipment itself. The control unit can be a single unit or be formed by a plurality of different control units depending on the design choices and operational needs.

*Control unit* means an electronic type component which can comprise at least one of: a digital processor (CPU), an analogue type circuit, or a combination of one or more digital processors with one or more analogue type circuits. The control unit can be "configured" or "programmed" to carry out certain steps: in practice, this can be accomplished by any means that allows the control unit to be configured or programmed. For example, in the case of a control unit comprising one or more CPUs and one or more memories, one or more programs can be stored in appropriate memory banks connected to the CPU(s); the program(s) contains instructions which, when executed by the CPU(s), program or configure the control unit to carry out the operations described in relation to the control unit. Alternatively, if the control unit is or comprises analogue circuitry, then the circuitry of the control unit can be designed to include circuitry configured, in use, to process electrical signals so as to carry out the steps related to the control unit.

Parts of the method described herein can be carried out by a data processing unit, or control unit, technically replaceable with one or more electronic computers designed to perform a portion of software program or firmware loaded on a memory medium. Such a software program can be written in any programming language of known type. Electronic computers, if in number equal to two or more, can be connected to each other by means of a data connection such that their computing powers are in any way shared; the same electronic computers can therefore even be installed in geographically different locations, creating a distributed computing environment through the aforementioned data connection.

The data processing unit, or control unit, can be a general purpose processor configured for performing one or more parts of the method identified in the present disclosure through the software or firmware program, or be a dedicated ASIC or processor or an FPGA, specifically programmed to perform at least part of the operations of the method described herein.

The memory medium can be non-transitory and can be internal or external to the processor, or control unit, or data processing unit, and can - specifically - be a memory geographically located remotely with respect to the electronic computer. The memory medium can also be physically divided into multiple portions, or in cloud form, and the software or firmware can provide portions stored on geographically divided portions of memory.

In the present discussion, the control unit can define all or part of a battery management system (BMS). The BMS is configured to ensure the safety and efficiency of the battery. For example, the BMS can be configured to:
monitor the voltage: check that the voltage of the cells remains within safe limits.
manage charging and discharging: prevent overcharging and excessive discharging of the cells.
balance cells: ensure that all cells have the same charge level.
manage the temperature: monitor and adjust the temperature to avoid overheating or excessive cooling.

The term *"control panel"* means a tool capable of providing a visual representation of at least one battery parameter to a user. For example, the control panel can provide one or more signals relating to the status of one or more components of the battery, warnings (e.g. indications relating to a possible overheating of the battery), errors (e.g. identifying an incorrect voltage and/or current of the cells), an indication of the charge level of the battery, in particular of the cells. The control panel, indicated with reference numeral 40 in the present detailed disclosure, can be of a digital or analogue type.

"*Cell*" means the battery component configured to store and convert chemical energy into electrical energy. Each cell comprises:
a negative electrode (anode) that releases electrons during discharging,
a positive electrode (cathode) that accepts electrons during discharging,
an electronic substance that allows the movement of ions between the anode and the cathode,
a separator that prevents direct contact between anode and cathode, avoiding short circuits, but allowing the passage of ions.

*"Degree of IP protection"* of the casing 2 means the capacity thereof to isolate the compartment V from solid particles and water. This classification (Ingress Protection) consists of two digits and sometimes additional letters. The first digit indicates the level of protection against the ingress of solid bodies, such as dust and particles, while the second digit indicates the level of protection against the ingress of liquids, such as water.

In detail, the degree of IP protection (Ingress Protection) used to define the level of insulation of the casing is a classification system defined by the international standard IEC 60529.

### DETAILED DESCRIPTION

### Battery

A battery has been indicated with the reference numeral 1, for powering work equipment 100, for example to carry out maintenance and/or construction activities in the domestic, professional or industrial field. For example, the battery 1 object of the present invention can be used for electrically powering lawnmowers, edge trimmers, lawnmower tractors, chainsaws, blowers, autonomous navigation vehicles, and other devices usable for the maintenance of plots of land or gardens, such as the mowing of grass, the pruning of plants and the cleaning of environments.

The battery 1 object of the present invention can be rechargeable and have a charging capacity comprised between 2.5Wh and 40Wh. In an example, the battery 1 can be configured to generate an overall potential difference comprised between 10V and 60V, optionally equal to 24V, 48V and 56V. In greater detail, the battery 1 can be configured for delivering a current comprised between 5A and 60A.

As visible in the attached figures, the battery 1 comprises a casing 2 defining a compartment V in which at least one cell 3 is housed, for example of rechargeable type, configured to generate electricity. In particular, the battery 1 comprises a plurality of electrochemical cells 3 configured to convert chemical energy into electrical energy to be used to power the equipment or vehicle in which it will be installed. In fact, the structure and number of cells 3 define the size and power of the battery 1.

In detail, the electrochemical cells 3 are configured to generate electricity intended to power the work equipment on which it is installed. The cells 3 can be of the lithium ion type and arranged in a matrix configuration, divided into two or more groups. Each group comprises cells aligned along respective axes parallel to one another and define the rows of the matrix.

The cells 3 belonging to each group are electrically connected in series, have an incremental electric potential difference proceeding along the respective axis until a maximum electric potential difference is reached at a terminal end where an electrical connection component is located, which electrically connects the cells of each group with a control unit 50, described below.

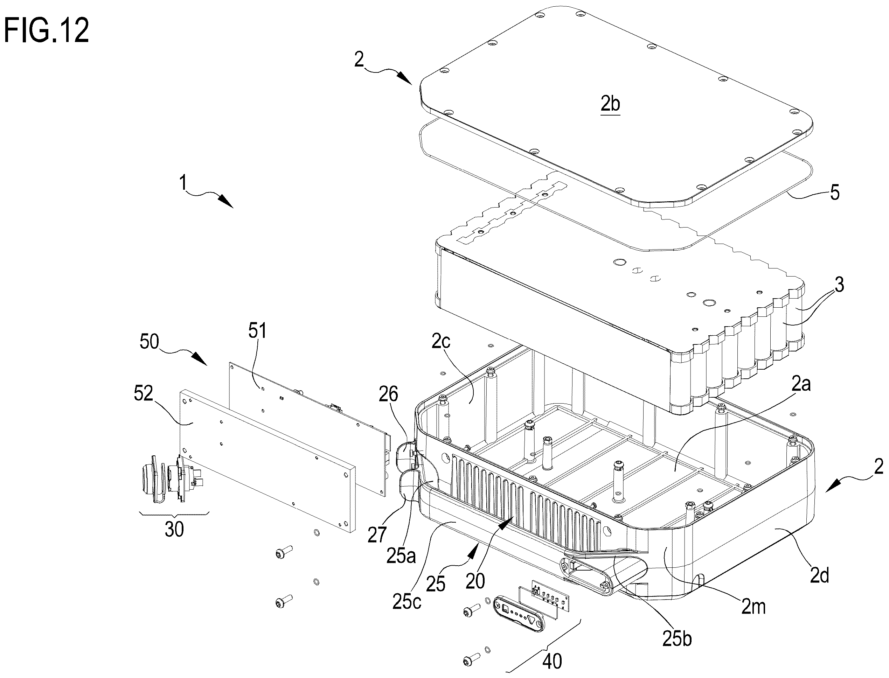

Each cell belonging to a group can be aligned with a corresponding cell of an adjacent group along a transverse extension direction, optionally, orthogonal to the development axes of the cells. This alignment along the axis determines the columns of the matrix configuration. In the example illustrated in Figure 12, each group of cells contains fourteen cells aligned along the extension direction, giving rise to fourteen columns in the overall matrix. Furthermore, the battery 1 can be configured with eight groups of cells arranged along the development axis, determining eight rows in the matrix.

Furthermore, the electrochemical cells 3 can be arranged alternating polarity, with groupings of cells having a positive pole oriented in a first direction and further groupings of cells having a positive pole oriented in an opposite direction. It should also be noted that, within each group of cells, the groupings can follow a predefined pattern in which two cells with concordant polarity (for example, both with the positive pole oriented in the same direction) are flanked by two other cells with opposite polarity (both with the positive pole oriented in the opposite direction).

This repeated pattern generates a central area in the overall matrix of the battery 1, delimited by two outer columns, positioned on opposite sides with respect to the centre of the matrix, which have polarities opposite each other.

The battery 1 can also comprise a support for cells configured to define the three-dimensional arrangement of the cells in a matrix configuration, as previously described. The support for cells has two half-parts made of insulating material, each configured to couple to the cells from opposite sides and subsequently join each other, forming a single unit. Each half-part of the support has a plurality of cavities corresponding to the number of cells 3 of the battery. The cavities are sized and shaped to allow the partial insertion of the cells, ensuring a stable fastening during assembly. The support for cells also allows maintaining a defined distance between the electrochemical cells, preventing them from coming into contact with each other. Such distance helps prevent unwanted contact, which could cause short circuits or electrical damage. In other words, the cavities of the first and second half-parts of the support for cells are arranged so that the cells, once housed, are completely spaced apart from each other, creating an electrical insulation.

The two half-parts of the support for cells 3 are respectively coupled from a first direction, for example orthogonal to a plane defined by the development axes and the extension direction, and from an opposite second direction, thus grouping the cells together. The coupling between the two half-parts occurs by means of complementary fastening components, such as joints, tabs or locking elements.

The position, structure and size of each cell 3 defines the shape and size of the plurality of cells. For example, the cells 3 can be organized as illustrated in Figure 12 to substantially define a three-dimensional body having a rectangular parallelepiped shape. The cells 3 define a predetermined overall volume.

The casing can comprise at least one bottom wall 2a and one front wall 2b spaced apart from each other by at least one side wall 2c, 2d, 2e, 2f. The bottom wall 2a and the side wall can be joined together to define a kind of shell having a hollow three-dimensional configuration, configured to accommodate the electrochemical cells 3. The front wall 2b can be removably engaged with the side wall to essentially define a removable cover. In detail, the side wall is integrally attached and emerges from a perimeter edge of the bottom wall 2b; the side wall delimits, on the side opposite the bottom wall, an access through which it is possible to insert the components of the battery 1, for example the plurality of cells 3 and a control unit 50. The front wall 2b is configured to close said access to define a hermetically closed casing 2.

For example, at least one of the bottom wall 2a and the side wall can comprise a plurality of threaded columns, whose ends are positioned near said access to allow the removable constraint from the front wall to the side wall of the casing. The front wall 2b can therefore comprise a flat panel which can be engaged with the threaded columns.

The battery 1 can further comprise a gasket S interposed between the side wall and the front wall 2b of the casing 2; the gasket S is configured to fluid-tightly seal the battery, preventing the unwanted passage of fluids inside the casing 2 where the plurality of cells are located.

In fact, the casing 2 can be devoid of through openings configured to allow the ventilation of the battery 1, for example to allow the cooling of the battery due to the heating of the plurality of cells and/or the control unit 50 placed in the compartment V, when the battery is in use.

For example, the casing 2 can be configured to prevent water and/or dust from entering the compartment. In fact, the casing 2 can have a degree of protection equal to or higher than IP31, optionally equal to or higher than IP44, even more optionally equal to or higher than IP56.

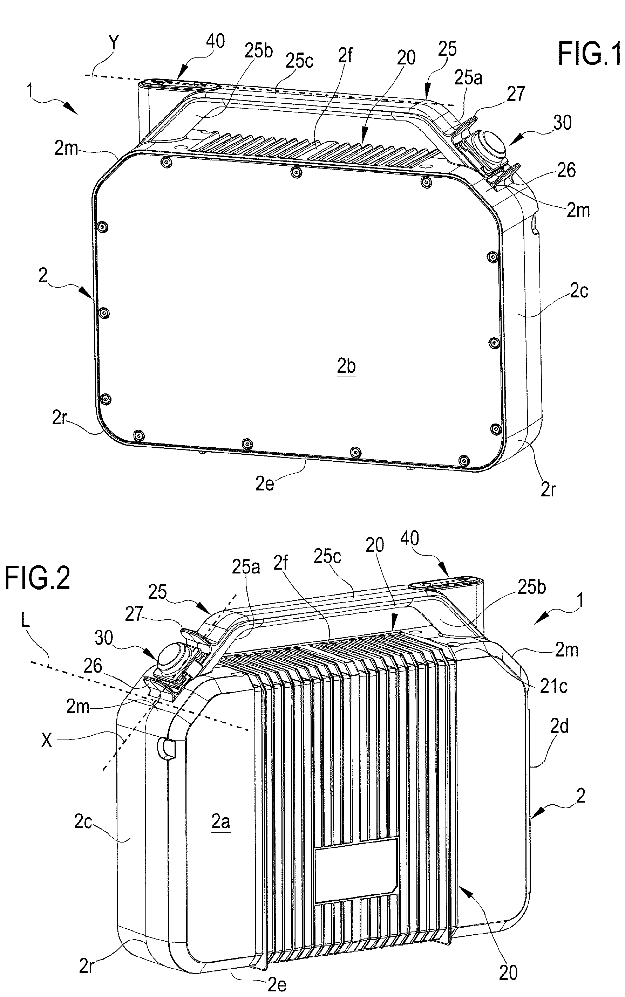

Figures 1 to 8 show a casing 2 having a side wall comprising
a first side wall 2c and a second side wall 2d opposite to each other,
a third side wall 2e and a fourth side wall 2f opposite to each other.

In detail, the first and second side walls 2c, 2d are spaced apart and connected to each other by means of the third and fourth side walls 2e, 2f; the third and fourth side walls 2e, 2f are spaced apart and connected to each other by means of the first and second side walls 2c, 2d. Such side walls can have a substantially rectangular shape to define a casing 2 having a three-dimensional rectangular parallelepiped shape.

The side walls of the casing 2 can be further connected to each other by means of fittings and/or chamfers. Figures 1 to 8 show, for example, the third side wall 2e connected to the first and second side walls 2c, 2d by means of connecting walls 2r, while the fourth side wall 2f is connected to said first and second side walls by chamfer walls 2m. For example, the chamfer wall 2m lies on a plane which is inclined with respect to the lying planes of the side walls immediately adjacent and connected by said chamfer wall (for example to the lying plane of the fourth side wall 2f) by an angle between 30° and 60°, optionally comprised between 40° and 50°. The possibility of providing a casing without connecting walls and chamfer walls or the possibility of providing a casing comprising only one or more chamfer walls or only one or more connecting walls is not excluded.

The bottom wall 2a and the front wall 2b can also be connected to the side wall by means of further connecting walls and/or chamfer walls. In Figure 2, a casing 2 is illustrated comprising a further chamfer connecting the bottom wall 2a with the side wall.

Such connecting and/or chamfer walls are configured to reduce the overall size of the battery 1 as well as act as lead-in walls for the insertion thereof in special housings, for example a part-battery of work equipment 100.

As described above, the casing 2 can have a rectangular parallelepiped shape. The possibility of making a casing having a different shape, for example substantially cylindrical, is not excluded.

As disclosed above, the casing 2 has a predetermined internal volume such as to allow the housing of battery components such as the at least one cell 3 (optionally the plurality of cells) and, if present, the control unit. In detail, the ratio between the internal volume of the casing and the overall volume of the at least one cell is comprised between 1.05 and 1.2. In fact, the compartment V of the casing 2 is large enough to be able to receive the plurality of cells in insertion as well as allow the extraction thereof for possible maintenance.

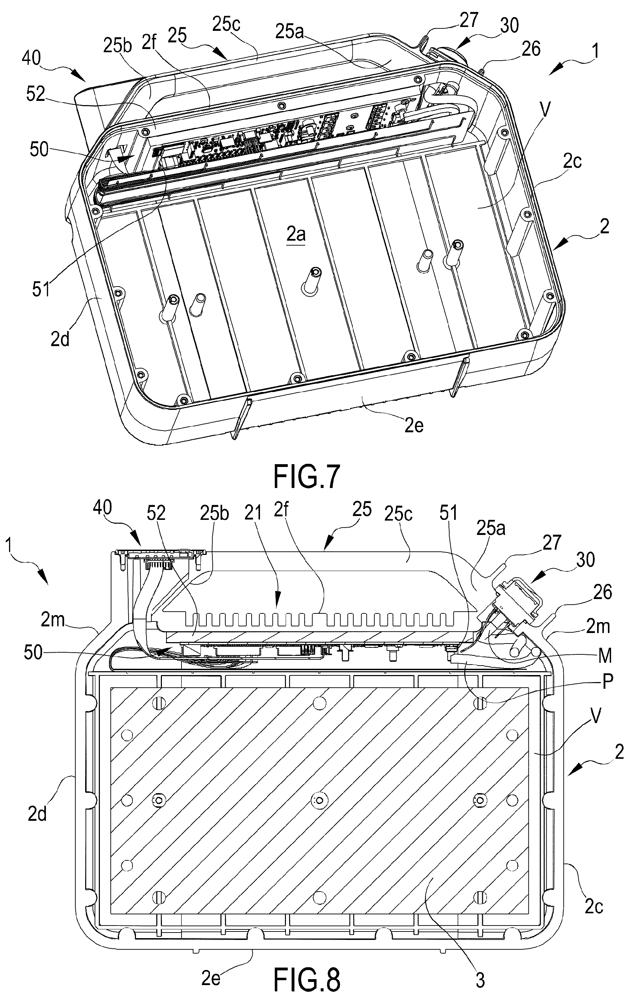

In an embodiment of the battery, it comprises a heat sink 20 configured to allow the dissipation of heat generated in the casing 2 and avoid unwanted overheating. As visible for example in Figure 2, the heat sink 20 is an integral part of the casing, i.e. it is made in one piece with the casing 2 defining a part of the latter. In detail, the heat sink 20 defines at least a part of an outer surface of the casing 2 as well as a part of the inner surface delimiting the compartment V (Figure 8).

The heat sink 20 is delimited by a perimeter edge, which in development (optionally lying) on an ideal plane, delimits a base surface; the heat sink 20 defines an outer surface whose extension is greater than an extension of the base surface. In particular, the ratio of the area of the outer surface to the area of the base surface is greater than 1.2, optionally comprised between 1.5 and 7, even more optionally between 1.5 and 5. In other words, the heat sink 20 has a shape that makes it possible to maximize the heat exchange surface in order to allow optimal heat dissipation. For example, the heat sink 20 comprises a slatted heat sink, which defines at least a part of the casing 2, optionally a part of the side wall of the casing 2.

In detail, the heat sink 20 comprises:
a base body 22 extending between a first and a second surface, wherein the first surface defines at least a portion of an inner surface of the casing 2.
a plurality of projections 21 emerging from the second surface of the base body 22 in the direction opposite the compartment V.

The second surface of the base body 22 together with the plurality of projections 21 define the outer surface of the heat sink and thus at least a part of an outer surface of the casing 2. The base body 22 has a plate-like structure and has a thickness defined by the distance between the first and second surfaces, which can be comprised between 2 and 7 mm, optionally between 2 and 5 mm.

Each projection 21 has a substantially plate-like or lamellar structure; the plurality of projections 21 extend in length along respective substantially parallel trajectories, optionally parallel to a lying plane of the base body 22 and straight. Each projection can have a length, measured along the respective extension direction, greater than 50 mm, optionally greater than 60 mm.

Each projection of the heat sink extends in height starting from the base body 22 away from the compartment V of the casing and which can be greater than 0.9 mm, optionally comprised between 1 mm and 15 mm, even more optionally between 1 mm and 10 mm including the extremes; the height of each projection can be constant or variable according to a development in length of the respective projection.

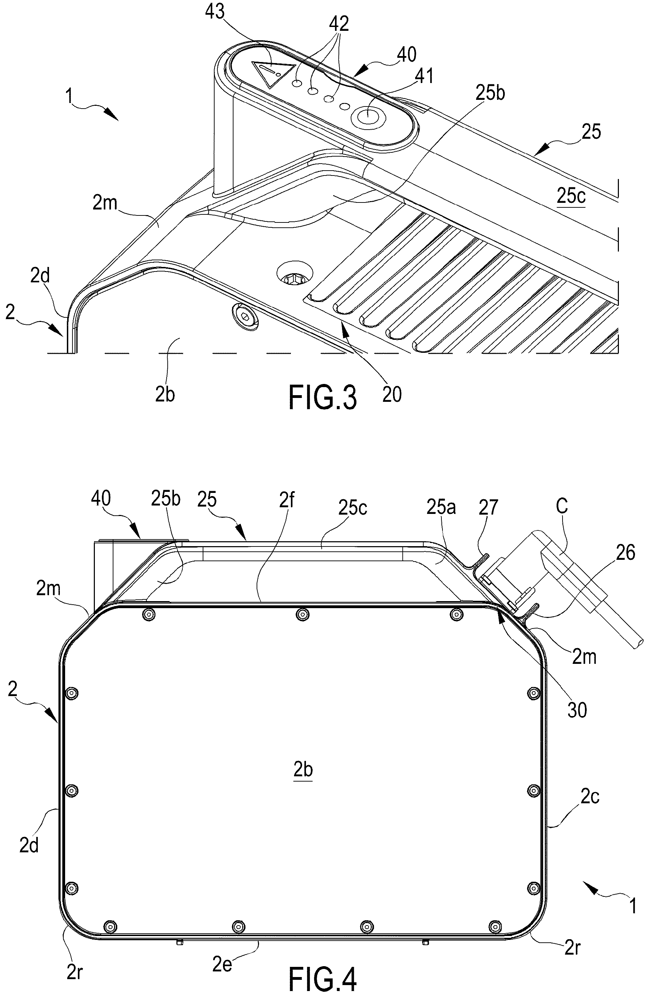

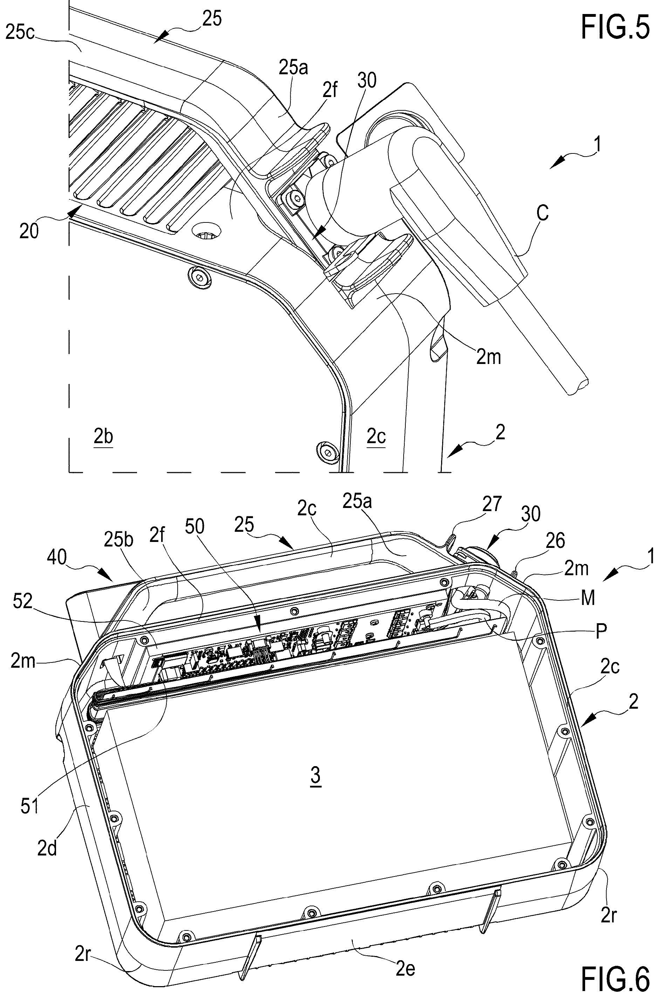

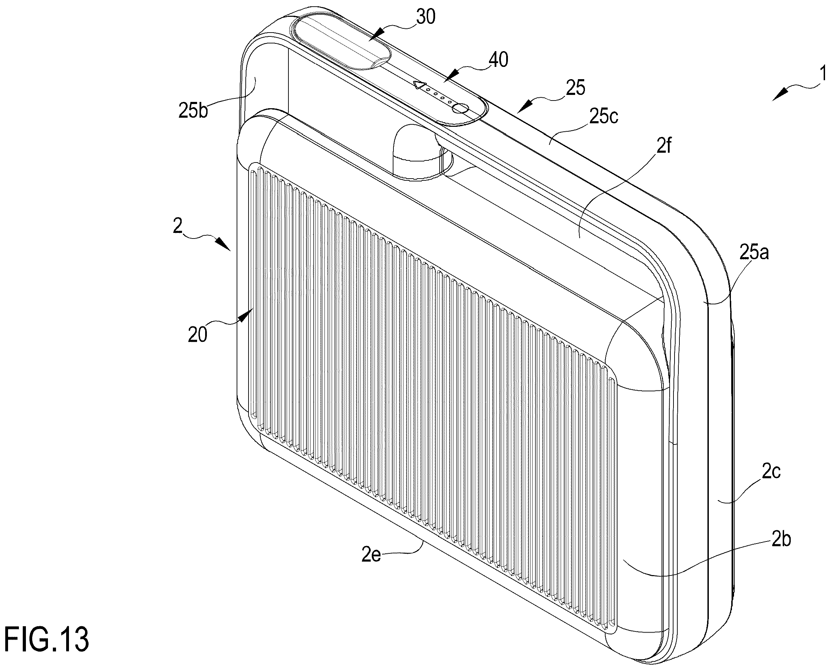

Each projection 21 also has a predetermined width, measured orthogonally to the extension direction in length and orthogonally to an extension direction in height of the respective projection; the width of each projection 21 is greater than 1.5 mm, optionally comprised between 1.7 mm and 7 mm. The width of each projection can also be constant or variable along the extension in length of the respective projection as well as constant or variable along the extension in height of the respective projection. In Figures 3 and 5, a heat sink 20 is shown having projections with a constant width according to an extension in height and variable according to an extension in length of the respective projection. Figures 2, 10 and 11 show, in a non-limiting manner, a heat sink 20 that defines at least a part of the bottom wall 2a of the casing 2 having projections 21 whose extension in width and height, along the extension in length, is substantially constant. Similarly, Figure 13 shows, in a non-limiting manner, a heat sink 20 that defines at least a part of the front wall 2b of the casing 2 having projections 21 whose extension in width and height, along the extension in length, is substantially constant.

The structure as well as size of the projections 21 substantially determines the extension of the outer surface of the heat sink 20 and thus its ability to dissipate heat. For example, the ratio between the height and the width of a projection 21 is comprised between 0.3 and 6, optionally between 0.4 and 5; the ratio between the width of a projection 21 and the thickness of the base body 22 is instead comprised between 1 and 4, optionally between 1 and 3.

As described above, the casing 2 is hermetically closed to prevent the access of liquids and/or solid bodies in the compartment that could damage the components of the battery, for example the plurality of cells (i.e. the electrical connections present between the plurality of cells) and the control unit 50. The casing 2 is therefore free of through openings configured to allow ventilation of the compartment and therefore cooling of the battery. The heat sink 20, an integral part of the casing, is therefore also free of through openings configured to put the internal volume of the casing in fluid communication with the external environment. In fact, the only component of the battery configured to manage the temperature thereof is defined by the heat sink which, thanks to its lamellar structure, makes it possible to maximize the heat exchange surface allowing an optimal dissipation of the heat generated by the plurality of cells and/or the control unit housed in the casing.

In particular, the projections 21 of the heat sink 20 are spaced apart from each other, defining a plurality of gaps. Each gap can have a width, measured orthogonally to an extension in length of the projections 21, which can be comprised between 1 mm and 20 mm, optionally between 2 mm and 10 mm. The gaps are configured to allow the passage of an air flow therethrough, promoting convective heat exchange between the air and the surfaces of the projections 21. Thereby, the heat sink 20 can effectively dissipate heat to the outside without the need for forced ventilation or openings in the casing 2.

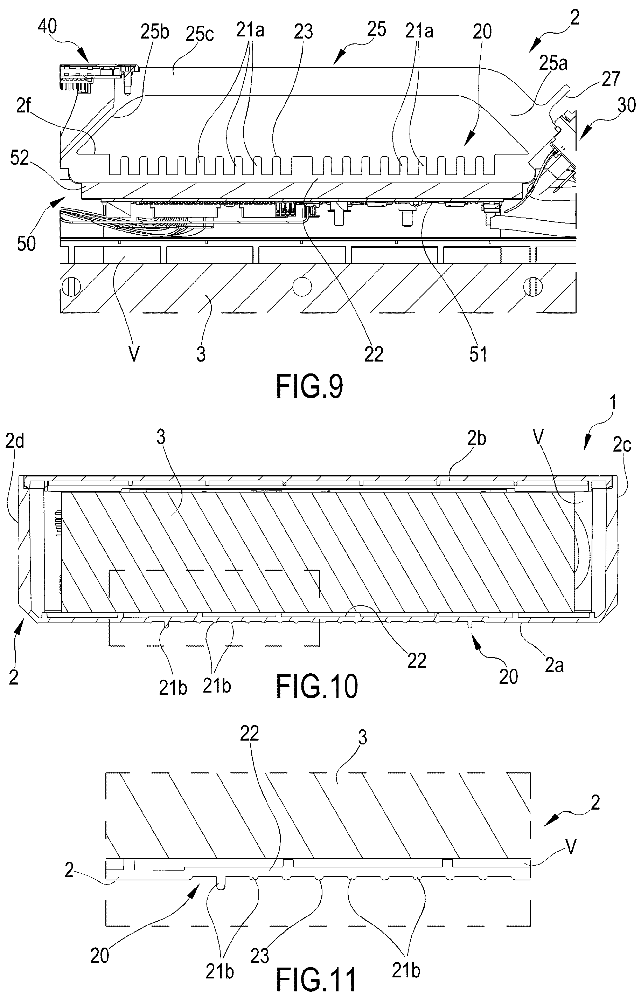

As mentioned above, the heat sink 20 is an integral part of the casing 2. In particular, the heat sink 20 defines at least a part of at least one of: the bottom wall 2a, the front wall 2b and the side wall 2c, 2d, 2e, 2f. Figures 1 to 12 show a heat sink 20 defining, in a non-limiting manner, at least a part of the side wall and the bottom wall 2a, in particular at least a part of the fourth side wall 4f and at least a part of the bottom wall 2a. In detail, as for example shown in Figure 2, the heat sink 20 extends substantially continuously from the side wall 2f to the bottom wall 2a of the casing 2. In this configuration, the plurality of projections 21 comprises a first plurality of projections 21a carried by the side wall 2f of the casing 2 and a second plurality of projections 21b carried by the bottom wall 2a (see in this case Figures 9 to 11). Each projection of the first plurality of projections 21a is connected to a respective projection of the second plurality of projections 21b by a connecting section 21c that develops at a transition area between the side wall 2f and the bottom wall 2a of the casing 2. Such a configuration makes it possible to maximize the continuity of the heat sink 20 and optimize the heat dissipation on several walls of the casing 2.

In an embodiment, the first plurality of projections 21a has larger dimensions than the second plurality of projections 21b. In particular, the first plurality of projections 21a has a greater height than a height of the second plurality of projections 21b. The height of the first plurality of projections 21a is measured orthogonally with respect to the side wall 2f of the casing 2, while the height of the second plurality of projections 21b is measured orthogonally with respect to the bottom wall 2a of the casing 2. This dimensional differentiation allows the characteristics of the heat sink 20 to be adapted to the specific thermal needs of the different areas of the casing 2.

Despite the difference in height, the first plurality of projections 21a can have a width substantially equal to a respective width of the second plurality of projections 21b, with a difference that does not exceed 10%. The width of the first plurality of projections 21a is measured parallel to the side wall 2f of the casing 2, while the width of the second plurality of projections 21b is measured parallel to the bottom wall 2a of the casing 2. Similarly, even the gaps defined between the projections of the first plurality 21a have a width substantially equal to the gaps defined between the projections of the second plurality 21b, always to less than a difference of 10%.

In an example, each projection of the first plurality of projections 21a can have an end surface that is substantially coplanar with an area of the side wall 2f of the casing 2 not occupied by the heat sink 20. Similarly, each projection of the second plurality of projections 21b has an end surface that is substantially coplanar with an area of the bottom wall 2a of the casing 2 not occupied by the heat sink 20. In other words, the projections 21 develop towards the inside of the compartment V, while their end surfaces remain substantially flush with the outer surface of the casing 2 in the adjacent areas without a heat sink. Such a configuration allows maintaining a substantially uniform outer profile of the casing 2, facilitating the handling and positioning of the battery 1.

Figure 13 shows a heat sink 20 defined, in a non-limiting manner, on a preponderant part of the front wall 2b. The position of the heat sink 20 can be independent of the configuration of the components inside the casing 2 or can be defined at internal parts that generate heat when the battery is in operation, for example at the plurality of cells and/or the control unit 50.

The extension of the heat sink 20 can instead depend on the size of the battery and/or its ability to generate heat when in operation. For example, the heat sink 20 can occupy a preponderant part of the wall on which it is defined, as for example illustrated in Figure 2, where the heat sink 20 occupies a preponderant part of the bottom wall 2a and of the fourth side wall 4f. For example, the fourth side wall 2f has a perimeter edge delimiting a first area; the heat sink 20 defines a part of the fourth side wall 2f and has a respective perimeter edge delimiting a second area: the ratio between the second and the first area is greater than 0.5, optionally comprised between 0.6 and 1, even more optionally between 0.7 and 1. The bottom wall 2a instead has a perimeter edge delimiting a first area while the heat sink 20 defines a wall of the bottom wall 2a and has a respective perimeter edge delimiting a second area: the ratio between said second area (optionally the area delimited by the perimeter edge of the heat sink on the bottom wall) and the first area (optionally the area of the perimeter edge delimiting the bottom wall) is greater than 0.5, optionally comprised between 0.6 and 1, even more optionally between 0.7 and 1. Similar ratios can be defined in relation to the heat sink when defined on the front wall 2b.

In order to be able to dissipate heat, it is preferable that the heat sink 20 is made at least in part of a material having an excellent thermal conductivity, for example a thermal conductivity that, under the same conditions as the outline, is higher than that of plastic materials. For example, the heat sink 20 is made of a material having a thermal conductivity greater than 50 W/mK, optionally greater than 150 W/mK, even more optionally comprised between 170 W/mK and 450 W/mK. In particular, the heat sink 20 can be made of metallic material, for example of at least one of the following materials: aluminium, copper, steel, iron, a copper alloy, an aluminium alloy, a magnesium alloy. In an embodiment, the entire heat sink 20 is made of aluminium. Likewise, the casing 2, in the part not involved by the heat sink 20, can also be made of material having a thermal conductivity similar to that of the heat sink. In particular, a preponderant part of the casing 2, optionally at least 55%, even more optionally 65% of the casing 2, which comprises the heat sink 20 can be made of a material having a thermal conductivity greater than 50 W/mK, optionally greater than 150 W/mK, even more optionally comprised between 170 W/mK and 450 W/mK. In detail, a preponderant part of the casing 2, optionally at least 55%, even more optionally 65% of the casing 2 which comprises the heat sink 20 is made of at least one of the following materials: aluminium, copper, steel, iron, a copper alloy, an aluminium alloy, a magnesium alloy. In a non-limiting embodiment of the battery 1, the side wall and the bottom wall 2a (i.e. the walls in one piece) are made of metallic material, for example aluminium, while the remaining front wall 2b can be made of plastic material. In detail, the lamellar shape of the heat sink, together with the material used, allows it to adequately dissipate the heat generated in the compartment V, for example during use of the battery 1 by the plurality of cells 3 and the control unit 50.

The battery 1 can comprise, in a non-limiting manner, a control unit 50, configured to manage the charging and discharging operations of the cells 3, as well as the balancing of potential differences between the cells. The control unit 50 is housed in the casing 2 and connected on one side, to electrical contacts of the battery (described below) and, on the other side, with the at least one cell 3 (optionally the plurality of cells). In the following, reference will only be made to a plurality of cells 3 without obviously excluding that such a plurality can be replaced by a single electrochemical cell 3. The control unit 50 is substantially configured to control the passage of electrical energy:
from the electrical contacts to the plurality of cells 3,
from the plurality of cells 3 to the electrical contacts.

In fact, the control unit 50 is interposed, at the level of electrical connection, between the plurality of cells 3 and the electrical contacts. From a purely positional point of view, the control unit 50 can be interposed between the plurality of cells and the side wall of the casing 2 as well as between the plurality of cells and at least one of the bottom wall 2a and the front wall 2b. In the attached figures, a control unit 50 is illustrated in a non-limiting manner, interposed between the plurality of cells 3 and the fourth side wall 4f of the casing on which at least part of the heat sink 20 is defined.

In an embodiment, the control unit 50 is directly fixed to a part of the base body 22 of the heat sink 20 (Figures 8 and 9). In particular, when the heat sink 20 comprises a first plurality of projections 21a on the side wall 2f, the control unit 50 can be constrained to one or more projections of the first plurality of projections 21a. Such constraint allows optimizing the dissipation of the heat generated by the control unit 50 during the operation of the battery 1. The projections 21a of the first plurality, having larger dimensions with respect to the projections 21b of the second plurality, offer a wider heat exchange surface and a greater heat dissipation capacity, being particularly suitable for cooling the control unit 50 which generates significant amounts of heat during battery charging and discharging operations.

Alternatively, the battery 1 can comprise a support plate 52 interposed between the control unit 50 and at least a part of the heat sink 20. In detail, the control unit 50 can be directly carried by the support plate 52 which is engaged. In a 73rd aspect according to any one of the preceding two aspects, the support plate 52 is directly engaged, i.e. in direct contact, with the base body 22 of the heat sink 20.

The support plate 52 can also be made at least in part of a material having, under the same conditions as the contour, a thermal conductivity higher than that of plastic materials. For example, the support plate 52 is made of a material having a thermal conductivity greater than 50 W/mK, optionally greater than 150 W/mK, even more optionally comprised between 170 W/mK and 450 W/mK, for example in at least one of the following materials: aluminium, copper, steel, iron, a copper alloy, an aluminium alloy, a magnesium alloy. In an embodiment, the support plate 52 is made of the same material as the heat sink 20, for example, aluminium.

As shown in Figures 7-9, the control unit 50 comprises an electronic board 51 that supports a controller; the electronic board 51 is directly engaged with the base body 22 of the heat sink 20 or is directly engaged with the support plate 52. Thereby, the heat sink 20 can effectively collect the heat generated by the control unit to dissipate it.

The battery 1 further comprises an interconnecting structure of the cells 3 configured to electrically connect the cells 3 to each other. The interconnecting structure can comprise, for example, electrical connection bars, busbars or other conductive elements that electrically connect the terminals of the cells 3. Such an interconnecting structure is located in the compartment V of the casing 2 near the bottom wall 2a of the casing 2. During the operation of the battery 1, the interconnecting structure generates heat due to the electrical resistance of the connections between the cells 3. When the heat sink 20 comprises the second plurality of projections 21b on the bottom wall 2a, the interconnecting structure can be constrained to the second plurality of projections 21b. Such a constraint allows the heat generated by the interconnecting structure to be dissipated, improving the overall thermal efficiency of the battery 1 and preventing localized overheating that could compromise the performance or safety of the system.

In an embodiment, the battery 1 can comprise a handle 25 constrained to the casing 2 and configured to allow a user to grasp and transport the battery 1. In an embodiment, the handle 25 is integrally attached to at least a part of the casing 2, for example in one piece with the side wall and the bottom wall 2a of the casing. Figure 1 shows a casing in which the handle 25, the bottom wall 2a and the side wall of the casing define a single rigid solid body. The possibility of making a handle detachable from the casing 2, for example constrained by means of screws and/or a clip system to the casing 2, is not excluded.

In an embodiment, the handle 25 emerges from the side wall of the casing 2 and comprises:
a gripping portion 25c spaced apart from the casing 2 and configured to be grasped by a user;
at least one connecting portion that connects the gripping portion 25c to the side wall of the casing 2.

The gripping portion 25c and the at least one connecting portion of the handle 25 are spaced apart from the side wall of the casing 2, defining, in cooperation with the side wall of the casing 2, a free space sized to receive a user's hand for gripping the battery 1. In such a context, the connector 30 can be carried by the at least one connecting portion of the handle 25 at an area spaced apart from the side wall of the casing 2 and delimiting said free space.

Furthermore, the heat sink 20 defines an area of the side wall 2f of the casing 2 to which the handle 25 is fixed, which partially delimits the free space. In particular, the first plurality of projections 21a of the heat sink 20 face the free space. Such a configuration makes it possible to exploit the natural airflow that is generated in the free space during the handling of the battery 1 to further improve the thermal dissipation through the first plurality of projections 21a of the heat sink 20.

In an example, the gripping portion 25c extends in length between a first and a second portion of opposite ends and is configured to allow a user to grasp the handle 25 for transporting the battery 1. The gripping portion 25c lies substantially on a plane, which is substantially parallel to a lying plane of the wall of the casing 2 directly facing the gripping portion 25c, for example, as illustrated in the attached figures, to a lying plane of the fourth side wall 2f.

The at least one connecting portion of the handle 25 can comprise a first connecting portion 25a and a second connecting portion 25b that respectively connect opposite ends of the gripping portion 25c to the casing 2. In detail, the first connecting portion 25a joins the first end portion of the gripping portion 25c with the casing 2 while the second connecting portion 25b joins the second end portion of the gripping portion 25c with the casing 2. In an embodiment, the first connecting portion 25a of the handle 25 and optionally also the second connecting portion 25b, has an elongated body that develops along a development direction X substantially transverse to the gripping portion 25c of the handle 25 and/or the side wall of the casing 2 to which the first connecting portion 25a is engaged.

In the attached figures, a handle 25 is illustrated in a non-limiting manner, in which the first and second connecting portions 25a, 25b substantially emerge from the fourth side wall 2f, optionally from opposite chamfer walls 2m that connect the gripping portion 25c to the casing 2, which directly faces said fourth side wall 2f.

The handle 25 has an inner surface facing the compartment V of the casing 2 and an opposite outer surface. At least a part of the outer surface of at least one of the first and second connecting portions 25a, 25b of the handle 25 is inclined with respect to a portion of the side wall of the casing 2 directly facing the gripping portion 25c or it is inclined with respect to an outer surface of the gripping portion 25c which is substantially flat. In particular, the side wall portion of the casing 2 directly facing the gripping portion 25c of the handle 25 (e.g., the fourth side wall 2f) lies substantially on an ideal plane. At least a part (optionally all) of the outer surface defined by the first connecting portion 25a is inclined with respect to said ideal plane of the side wall portion of the casing 2 directly facing the gripping portion 25c.

The first connecting portion 25a extends starting from the side wall portion of the casing 2 directly facing the gripping portion 25c according to a direction exiting from the compartment V of the casing 2, optionally extending starting from the side wall portion of the casing 2 directly facing the gripping portion 25c substantially approaching with respect to the second connecting portion 25b.

The angle defined between the inclined outer surface of the first connecting portion 25a and the lying plane of the wall of the casing directly facing the gripping portion 25c (optionally the lying plane of the fourth side wall 2f) is of an acute type. In particular, said angle, subtended between the side wall portion directly facing the gripping portion 25c of the handle and said outer surface of the first connecting portion 25a, is comprised between 30° and 60°, optionally between 40° and 50°, still more optionally substantially equal to 45°.

Only one part of the first connecting portion 25a, e.g. the outer surface, can be inclined with respect to the wall of the casing. In the attached figures a first connecting portion 25a is illustrated which is entirely inclined with respect to the side wall portion directly facing the gripping portion 25c, optionally with respect to the fourth side wall 2f of the casing. The second connecting portion 25b can also be inclined with respect to a lying plane of the gripping portion 25c and to a lying plane of the side wall of the casing directly facing said gripping portion. In the attached figures, an outer surface of the second connecting portion 25b is illustrated, which lies, at least in part, on a plane substantially parallel to the lying plane of the outer surface of the gripping portion 25c, optionally it lies on the same lying plane of the outer surface of the gripping portion 25c.

In an embodiment, the outer surface of the gripping portion 25c is also flat and can be inclined with respect to at least one, optionally both, of the outer surfaces of the first and second connecting portions 25a, 25b, by a same angle between 30° and 60°, optionally comprised between 40° and 50°, still more optionally substantially equal to 45°.

The handle 25 can comprise a hollow body having an internal volume in fluid communication with the compartment of the casing, optionally with the internal volume of the casing 2.

The battery 1 comprises a plurality of electrical contacts configured to electrically connect the battery 1 to one or more external electrical components, The contacts can be directly carried by the casing 2 and/or by the handle 25 without the presence of a support or they can be part of a connector 30 as illustrated in the attached figures. For example, the connector 30 comprises an electrically insulating body carrying the plurality of electrical contacts. The connector 30 can be of the interlocking type, optionally configured to engage and electrically connect to a respective electrical connector of an external component. In the following description, reference will be made only to the connector 30; the possibility that the connector 30 can be replaced by simple electrical contacts carried directly by the casing 2 and/or by the handle is obviously not excluded.

The connector 30 is connected directly to the control unit 50, optionally to the electronic board 51, by means of power cables to allow the transmission of electrical signals in and/or out of the battery. In other words, the connector 30 connects, through special wiring, the battery 1 to work equipment (for example a vehicle) or to a charging base. This allows the battery 1, under charged conditions, to power both the motorization of the work equipment and its on-board components. When the battery 1 is discharged, the connector 30 allows it to be recharged by connecting the work equipment to a power source, such as the mains.

In an embodiment, the connector 30 is carried by the handle 25. In particular, it is carried by at least one of the gripping portion 25c and the at least one connecting portion. In detail, the casing 2 in accordance with Figures 1 to 12, the connector 30 is carried at least in part by the first connecting portion 25a. In still greater detail, the outer surface of the first connecting portion 25a has a through access that places an internal volume of the handle 25 in fluid communication with the external environment; the connector 30 is engaged at least in part in said through access of the first connecting portion 25a. As can be seen in Figures 6 and 8, the connector 30 comprises a positive pole P and a negative pole M connected by respective cables to a positive pole and a negative pole of the control unit 50: the cables connecting the poles of the connector 30 to the poles of the control unit 50 are placed at least in part in the hollow body of the handle 25 and in part in the casing 2.

In an embodiment variant, the connector 30 is defined on a connecting portion and/or on a chamfer portion of the casing, different from the handle 25. For example, the connector 30 can be defined on at least one chamfer wall 2m of the casing 2.

The battery 1 can further comprise at least one protective flap that emerges substantially to the side of the connector 30 and configured to protect the connector 30 from impacts. In the attached figures, a protection flap is illustrated that emerges in height from the outer surface of the carrying handle 25 (optionally directly) the connector 30 at least up to a top portion of the connector 30 to protect the connector 30 from side impacts. In particular, the protection flap emerges from the handle 25 along a direction substantially orthogonal to the outer surface of the handle 25. The protection flap is integrally attached to the hollow body of the handle 25 and has a width substantially equal to a width of the outer surface of the handle 25. In accordance with what is shown in the attached figures, each protection flap can have an elongated shape, optionally having a substantially rectangular or trapezoidal shape.

In an embodiment of the battery, the protection flap emerges from the outer surface of the first connecting portion 25a, on the side of the connector 30, and is made of metallic material, optionally of the same material as the handle 25. The at least one protection flap can be made integral with the handle and therefore with at least a part of the casing 2, for example with the side wall and the bottom wall 2a of the casing.

The at least one protection flap can comprise a first and a second protection flap 26, 27 located on the side of the connector 30 such that the connector 30 is interposed between the first and second protection flaps 26, 27. In an example, the first and second protection flaps are plates lying on respective planes substantially parallel to each other and positioned on opposite sides of the connector 30, with the connector 30 interposed therebetween. In an embodiment, the first and second protection flaps extend beyond the connector 30 to protect it laterally and being spaced apart from each other to leave the connector 30 accessible between the first and second protection flaps. In other words, and as for example shown in Figures 1, 2, 4 and 5, the first and second protection flaps are mutually spaced and define a gap therebetween that allows a user to laterally contact the connector 30.

The first and second protection flaps can emerge in a substantially transverse direction, preferably substantially perpendicular, with respect to the outer surface of the first connecting portion 25a of the handle 25. Furthermore, each of the first and second protection flaps extends in a substantially transverse direction, preferably substantially perpendicular, with respect to the development direction X of the elongated body of the first connecting portion 25a.

The first and second protection flaps can have a same width that is greater than or equal to a width of the outer surface of the first connecting portion 25a from which they emerge. Said widths are measured along a lateral direction L that is substantially parallel to the outer surface of the first connecting portion 25a and transverse to the development direction X of the elongated body of the first connecting portion 25a. The width of each of the first and second protection flaps, measured along the lateral direction L, is greater than a corresponding width of the connector 30 measured in the same direction. This allows the first and second protection flaps to extend beyond the side edges of the connector 30, thereby providing effective protection against side impacts. The ratio between the width of each of the first and second protection flaps and the width of the connector 30 can be comprised between 1.05 and 1.5, optionally between 1.1 and 1.3, so as to ensure an adequate side projection without excessively increasing the overall size of the battery 1.

It should further be noted that the first and second protection flaps can jointly extend along less than 70%, preferably less than 60%, more preferably less than 50%, of a perimeter of the connector 30 measured in a plane parallel to the outer surface of the first connecting portion 25a of the handle 25. Thereby, the protection flaps ensure effective protection of the connector 30 against side impacts and at the same time promote more efficient heat dissipation, thanks to the greater exposure of the connector to the external environment which facilitates heat exchange with the surrounding air.

The battery 1 can be provided with a control panel 40, positioned near an end of the handle 25 opposite the connector 30 and configured to provide information relating to the operation of the battery. For example, the control panel 40 can have a screen or a combination of LED indicators, configured to signal to the user the charge state of the electrochemical cells 3, any battery overheating conditions or anomalies such as non-conforming voltages or currents of the cells.

In particular, the control panel 40 comprises at least one visual indicator 42, 43 configured to give indications to a user regarding at least one parameter of the battery 1. The visual indicator comprises at least one of: one or more LEDs, an analogue display, a digital display. The control panel 40 is also connected to the control unit 50 which is configured to:
receive at least one input signal from the plurality of cells 3 or groups of the plurality of cells 3 representative of at least one battery charge parameter,
determine at least one value of the battery charge parameter,
generate at least one command signal as a function of a determined charge parameter value,
send said command signal to the visual indicator 42, 43, which is configured to provide the user, as a function of the received command signal, with a visual representation of the charge level of the battery 1.

In particular, as mentioned above, the visual indicator comprises a plurality of LEDs; the command signal emitted by the control unit 50 is configured to allow the lighting of a predetermined number of LEDs, as a function of the value of the charge parameter determined by the control unit 50. In detail, the control unit 50 is configured to:
receive at least one input signal from the plurality of cells 3 or groups of the plurality of cells 3 representative of at least one battery charge parameter,
estimate at least one value of the battery charge parameter,
compare the estimated value of the charge parameter with one or more threshold parameters,
generate at least one command signal as a function of the comparison with said two or more thresholds,
send said command signal to the visual indicator 42, 43, which is configured to provide the user, as a function of the received command signal, with a visual representation of the charge level of the battery 1.

For example, if the visual indicator is defined by four LEDs and in a fully charged battery condition, the command signal of the control unit 50 is configured to allow all four LEDs to be turned on to give indications of a full charge state of the battery to the user. The control unit 50 can also be configured to compare the value of the charge parameter with one or more thresholds to determine different charge ranges. The control unit 50 is then configured to send the command signal to the control panel 40 by turning on a number of LEDs representative of the charge range of the battery 1. The charge parameter comprises at least one of: a voltage of the at least one cell, an average voltage of the plurality of cells, a voltage of a group of cells of the plurality of cells, an average voltage of two or more groups of cells of the plurality of cells.

The controller 50 can also be configured to:
receive at least one input signal from the plurality of cells 3 or groups of the plurality of cells 3 representative of at least one battery error parameter,
determine at least one value of the battery error parameter representative of an anomaly of the battery,
generate at least one command signal as a function of a determined error parameter value,
send said command signal to the visual indicator 42, 43, which is configured to provide the user, as a function of the received command signal, with a visual representation of the type of error determined by the control unit.

In particular, the command signal emitted by the control unit 50 is configured to allow the lighting of a predetermined number of LEDs of the visual indicator, as a function of the value of the error parameter determined by the control unit 50 to give an indication to the user of the detected error.

The error parameter comprises at least one of: a voltage of the at least one cell, an average voltage of the plurality of cells, a voltage of a group of cells of the plurality of cells, an average voltage of two or more groups of cells of the plurality of cells, a current of the at least one cell (optionally of the plurality of cells), a temperature inside the at least one cell, a temperature inside the casing, a charge state of the battery 1.

In detail, the visual indicator comprises a first visual indicator 42 and a second visual indicator 43. The control unit 50 is configured to:
send a command signal to the first visual indicator 42 as a function of the comparison of the estimated value of the charge parameter with said two or more thresholds,
send a command signal to the first and/or second visual indicator 42, 43 as a function of the comparison of the estimated value of the error parameter with said threshold.

In detail, the first visual indicator comprises a number of LEDs between 2 and 6, optionally comprised between 3 and 5, even more optionally equal to 4, while the second visual indicator comprises a number of LEDs between 2 and 6, optionally comprised between 3 and 5, even more optionally equal to 4.

The control panel 40 further comprises at least one button 41 configured to allow the user to send a request signal to the control unit 50; the control unit 50 is configured to:
receive the request signal from the button 41,
send said command signal to the visual indicator following the reception of the request signal.

In particular, the request signal can be sent by the user to request the charge state of the battery 1 from the control unit 50; as for the error parameter, this can be controlled by the control unit 50 even without a specific request by means of the button.

In an embodiment, the control panel 40 is carried by at least one of the handle 25 and the casing 2. In particular, the position of the control panel 40 is such as to allow the user to easily reach the panel when he grasps the battery from the gripping portion 25c of the handle.

In the embodiment shown in the attached figures, the control panel 40 is carried at least in part by the second connecting portion 25b. In particular, the gripping portion 25c can have a substantially flat outer surface, configured to facilitate ergonomic gripping by the user. The control panel 40, carried by the second connecting portion 25b of the handle 25, can be arranged coplanar with said substantially flat outer surface of the gripping portion 25c, so as to form a surface continuity that facilitates the display of information when gripping the battery.

In an embodiment, the control panel 40 has an elongated shape extending along the second connecting portion 25b starting from one end of the gripping portion 25c, more specifically from the second end of the gripping portion 25c opposite to the first end connected to the connector 30. Such an elongated configuration allows the control and display elements to be positioned in an area easily accessible to the user's thumb while gripping.

The control panel 40 can have a width, measured transversely to a longitudinal axis Y of the gripping portion 25c, substantially equal to a width of the gripping portion 25c measured transversely to the longitudinal axis Y of the gripping portion 25c. In particular, the width of the control panel 40 can differ from the width of the gripping portion 25c by no more than 10%, thereby ensuring visual and tactile continuity between the gripping portion and the control panel. The longitudinal axis Y of the gripping portion 25c is defined as a centreline axis that divides the gripping portion 25c into two substantially symmetrical halves. In an example, the longitudinal axis Y of the gripping portion 25c is coplanar with the outer surface of the gripping portion 25c.

In a preferred configuration, the button 41 and the visual indicator 42, 43 are aligned along the longitudinal axis Y of the gripping portion 25c, i.e. along said centreline axis that divides the gripping portion 25c into two substantially symmetrical halves. Such a central alignment of the button 41 and the visual indicator 42, 43 facilitates the intuitive operation by the user regardless of the use of the right or left hand, and reduces the risk of accidental actuations during battery transport.

The outer surface of the handle 25 carrying the control panel 40 can have a through access that places the internal volume of the handle 25 in fluid communication with the external environment. The control panel 40 is engaged at least in part in said through access, which is defined at the second connecting portion 25b or opposite the connector 30. The control panel 40 is connected to the control unit 50 by one or more cables which are placed at least in part in the hollow body of the handle 25 and in part in the casing 2.

The control panel 40 can further be carried by the casing 2, i.e. arranged on the side wall of the casing at the gripping portion 25c. Alternatively, the casing can comprise a kind of support configured to carry the control panel 40 so that it is arranged at a distance such as to allow the user, in the condition of transporting the battery, to grasp the gripping portion 25c and further to manually access the control panel 40.

For example, the control panel 40 can have a minimum distance from the gripping portion 25c of the handle 25 of less than 10 cm, optionally less than 7 cm.

The battery 1 according to the present invention can comprise the above-described casing 2 including the heat sink 20, the control unit 50, the plurality of cells 3, the handle 25 as well as the control panel 40 and the connector 30 both carried by the handle.

In a different embodiment, the battery 1 can comprise the above-described casing 2 including the heat sink 20, the control unit 50, the plurality of cells 3, the handle 25, the control panel 40 and the connector 30. In such an embodiment, the connector 30 can be carried by the casing, for example by a chamfer wall 2m or by the handle 25; the control panel 40 can also be carried by the casing 2 or by the handle 25.

In a further variant, the battery 1 can comprise only the above-described casing 2 including the heat sink 20, the control unit 50, the plurality of cells 3, a plurality of electrical contacts, and the control panel 40 defined on the casing 2, in particular on a chamfer (inclined) wall of the casing 2.

In a further embodiment variant, the battery can instead comprise the casing, without the heat sink 20, the control unit 50, the plurality of cells 3 and the connector 30 in accordance with what is described above. In a further embodiment variant, the battery 1 can instead comprise the casing 2, without the heat sink 20, the control unit 50, the plurality of cells 3, the plurality of electrical contacts and the control panel 40 in accordance with what is described above.

Furthermore, the battery 1 can comprise the casing 2, without the heat sink 20, the control unit 50, the plurality of cells 3, the connector 30 and the control panel 40 in accordance with what is described above.

### Work equipment

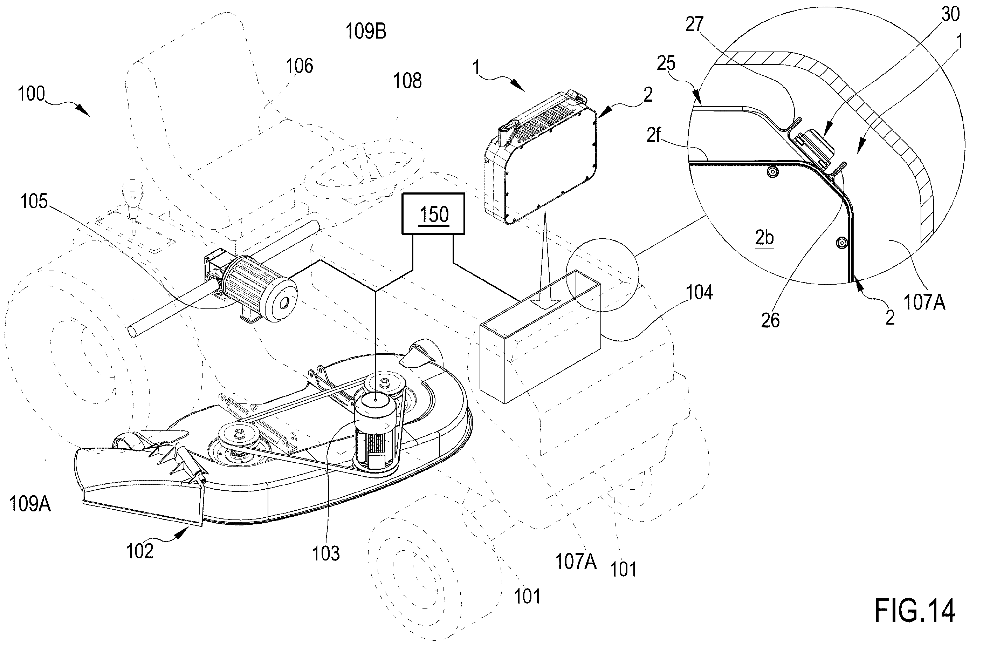

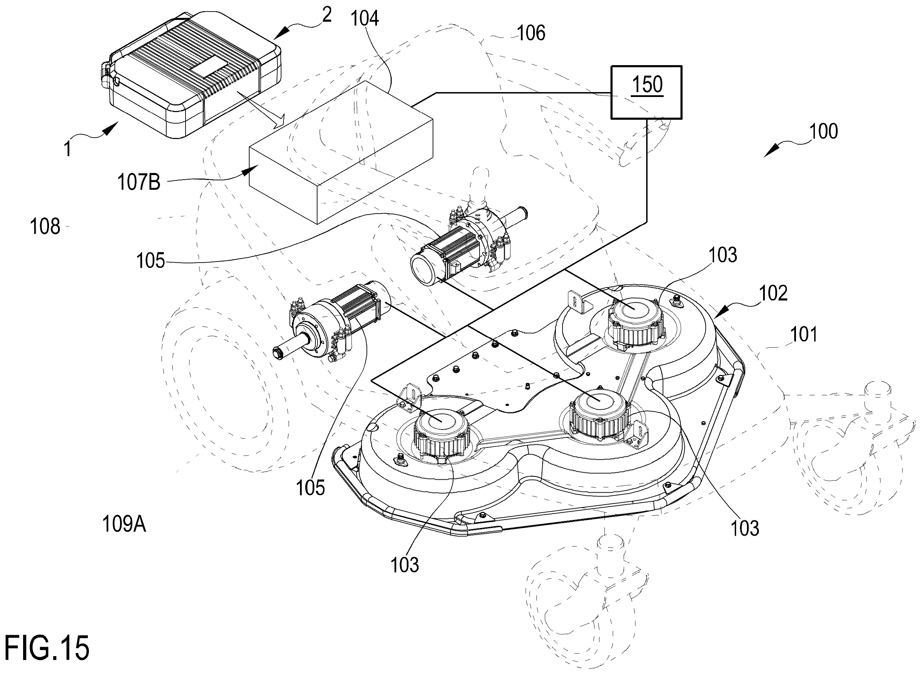

A piece of work equipment has been indicated with the reference number 100, for example for the maintenance of a plot of land, such as the mowing of a lawn, a garden or an agricultural plot of land. The work equipment 100 can comprise a vehicle for the maintenance of gardens as illustrated in Figures 14 and 15 and described below, comprising at least one battery 1 as described above.

The vehicle can be a device manually driven by a user from a driving station 106 and comprising traction members, for example one or more wheels or tracks, adapted to determine the advancement of the vehicle. In particular, the vehicle comprises a right traction member 109a and a left traction member 109b, in this case depicted by a right drive wheel and a left drive wheel, intended for the transmission of traction to the ground. In other words, the right traction member 109a and the left traction member 109b are motorized wheels, adapted to determine the movement of the vehicle on the ground to be maintained.

As shown in Figure 13, the vehicle comprises a single electric motor 105 mechanically connected, by means of a differential transmission member, to both the right traction member 109a and to the left traction member 109b, so as to rotate both traction members independently and simultaneously.

The possibility of providing a first and a second electric motor respectively connected to the right traction member 109a and to the left traction member 109b is not excluded. The first and second electric motors are configured to determine the forward, reverse or arcuate trajectory thereof of the vehicle by respectively rotating the right traction member 109a and the left traction member 109b. In particular, the first electric motor comprises a shaft on which the right traction member 109a is keyed, while the second electric motor comprises a respective shaft on which the left traction member 109b is keyed. The rotation of the shafts, respectively of the first and second motors, determines the rotation of the right traction member 109a and the left traction member 109b and thus the movement of the vehicle.

It should be noted that the right traction member 109a is mechanically connected exclusively to the first electric motor, while the left traction member 109b is mechanically connected only to the second electric motor: the traction members are thus moved independently of each other by means of a dedicated motor.

The vehicle can further comprise one or more non-motorized auxiliary wheels, configured for allowing the movement of the vehicle on three, four or more wheels. In particular, the vehicle comprises a right auxiliary wheel and a left auxiliary wheel freely movable for rotation around a vertical axis transverse to the ground. The auxiliary wheels are therefore not wheels controlled by a steering mechanism, but freely steering wheels.

The vehicle 100 further comprises a support frame 101 extending in length between a front portion at which the auxiliary wheels operate and a rear portion at which the right traction member 109a and the left traction member 109b operate. As shown in Figures 13 and 14, the right traction member 109a and the left traction member 109b are defined at a rear axle of the vehicle, while the auxiliary wheels are defined at a front axle opposite the rear axle of the vehicle.

In the accompanying figures, a vehicle comprising exclusively two motorized traction members independently of each other (right traction member and left traction member) has been shown, however, an embodiment of the invention in which the traction members and the auxiliary wheels are all motorized is not excluded.

The vehicle further comprises at least one battery 1 according to the description previously provided, electrically connected to the electric motor 105 or alternatively to the first and second electric motors. In a first embodiment variant of the vehicle, illustrated in Figure 13, there is a front compartment 107a, situated in front of the driving station 106, which defines a special compartment for housing the batteries inside respective battery-holder supports 107. The front compartment 107a can be compared to the hood of a conventional lawnmower vehicle, where, instead of an internal combustion engine, the batteries 1 are housed, thus ensuring a compact and efficient design for the installation of the same batteries.

In a second embodiment shown in Figure 14, the vehicle 100 can comprise a rear compartment 107b, located at the rear or below the driving station 106, defining a respective compartment for housing the batteries inside battery-holder supports 107.

It should be noted that the batteries 1 are not exclusively configured to power the first and second electric motors, but more generally configured to power each on-board electrical/electronic component, including a motor operating on a work tool 102, for example to perform grass mowing tasks.

The vehicle 100 further comprises a work tool 102 carried below by the support frame 101 and configured for performing a process on the land to be maintained. In particular, the work tool 102 can comprise at least one rotary blade adapted to contact the ground, for example to perform a grass cutting operation. The vehicle can further comprise at least one auxiliary electric motor 103, carried by the support frame 101 and configured for rotating the rotary blade. The work tool 102 can comprise a plurality of rotary blades, in particular two rotary blades. The rotary blades are spaced apart and, for example, rotatable according to parallel axes. In particular, the blades can lie adjacent to each other and operate on parallel cutting planes, with each of the blades rotating about a respective axis transverse to the ground. The blades can have the same diameter, or, alternatively, they can have different diameters from each other. **It** should also be noted that the rotary blades are preferably equi-rotating, so as to direct the cut grass towards the same discharge duct.

Each rotary blade is mechanically connected to a respective auxiliary electric motor of the vehicle. In fact, the vehicle 100 can include a plurality of auxiliary electric motors, each of which is configured for independently rotating a respective rotary blade. However, an embodiment of the invention in which the vehicle has a single auxiliary electric motor configured for rotating each rotary blade, for example by using a differential transmission member interposed between the auxiliary electric motor and each blade, is not excluded (Figure 13).

The vehicle 100 can further comprise a control unit 150 connecting the battery 1 with the at least one electric motor of the vehicle. The control unit 150 is configured to control the electrical energy output from the battery and send said energy to the motors for the movement of the vehicle and/or the activation of the work tool 102.

The work equipment 100 can further comprise an autonomously driven vehicle, for example for the maintenance of gardens, or an industrial or agricultural vehicle, for example a forklift truck. Such equipment is electrically powered by a control unit which controls the distribution of energy in and out of the battery, for example for the electrical power supply of electric actuators/motors for the activation of a work tool and/or for the movement of the work equipment.

## Claims

1. Battery (1) for electrically powering at least one piece of work equipment (100), said battery (1) comprising:
- a casing (2) defining at least one compartment (V),
- at least one rechargeable cell (3), housed in the compartment (V) of the casing (2) and configured to generate electricity,
- at least one connector (30) configured to electrically connect the battery (1) to one or more external electrical components,
- at least one handle (25) constrained to the casing (2) and configured to allow a user to grip and transport the battery (1),
- at least one control panel (40) carried at least in part by the handle (25) and comprising at least one visual indicator (42, 43) configured to show a user at least one parameter of the battery (1).

2. Battery according to Claim 1, wherein the handle (25) is integrally attached to at least a part of the casing (2), wherein the handle (25) and the casing (2) define a single rigid body.

3. Battery according to any one of the preceding claims, wherein the visual indicator comprises at least one of: one or more LEDs, an analogue display, a digital display.

4. Battery according to any one of the preceding claims, wherein the control panel (40) is positioned at one end of the handle (25),
wherein the handle (25) emerges from a side wall of the casing (2) and comprises:
- a gripping portion (25c) spaced apart from the casing (2) and configured to be grasped by a user;
- at least one connecting portion that connects the gripping portion (25c) to the side wall of the casing (2),
wherein the gripping portion (25c) and the at least one connecting portion are spaced apart from the side wall of the casing (2) defining a free space adapted to receive a user's hand for gripping the battery,
wherein the control panel (40) is carried by the at least one connecting portion of the handle (25).

5. Battery according to the preceding claim, wherein the at least one handle (25) connecting portion comprises a first connecting portion (25a) and a second connecting portion (25b) which respectively connect opposite ends of the gripping portion (25c) to the casing,
wherein the connector is carried by the first connecting portion (25a) of the handle while the control panel (40) is carried by the second connecting portion (25b) of the handle (40), being opposite to the connector (30) with respect to the gripping portion (25c) of the handle.

6. Battery according to the preceding claim, wherein the handle (25) comprises a hollow body having an internal volume in fluid communication with the compartment (V) of the casing (2),
wherein the outer surface of the second connecting portion (25b) has a through access that places an internal volume of the handle (25) in fluid communication with the external environment, wherein the control panel (40) is engaged at least in part in said through access.

7. Battery according to any one of the two preceding claims, wherein the gripping portion (25c) has a substantially flat outer surface,
wherein the control panel (40) is carried by the second connecting portion (25b) of the handle (25) and is coplanar with the outer surface of the gripping portion (25c).

8. Battery according to any one of the preceding three claims, wherein the control panel (40) has an elongated shape that extends along the second connecting portion (25b) starting from an end of the gripping portion (25c).

9. Battery according to any one of the preceding four claims, wherein the control panel (40) has a width, measured transversely, optionally orthogonally, with respect to a longitudinal axis (Y) of the gripping portion (25c), equal to a width of the gripping portion (25c) measured transversely to the longitudinal axis of the gripping portion (25c), to less than a difference of 10%,
wherein the longitudinal axis (Y) of the gripping portion (25c) is a centreline axis that divides the gripping portion (25c) into two substantially symmetrical halves,
optionally wherein the longitudinal axis (Y) of the gripping portion (25c) is coplanar with the outer surface of the gripping portion (25c).

10. Battery according to any one of the preceding claims, comprising:
- a control unit (50) housed in the casing (2), wherein the control unit (50) is connected, on one side, with the connector (30) and, on the other side, with the at least one cell (3),
- a button (41) connected to the control unit (50),
wherein the button (41) and the visual indicator (42, 43) are aligned along one/the longitudinal axis (Y) of the gripping portion (25c),
wherein said longitudinal axis (Y) of the gripping portion (25c) is a centreline axis that divides the gripping portion (25c) into two substantially symmetrical halves,
optionally wherein the longitudinal axis (Y) of the gripping portion (25c) is coplanar with the outer surface of the gripping portion (25c).

11. Battery according to the preceding claim, wherein the control unit (50) is connected to the at least one cell and configured to:
- receive at least one input signal from the at least one cell (optionally from the plurality of cells 3 or groups of the plurality of cells 3), representative of at least one battery charge parameter,
- determine at least one value of the battery charge parameter,
- generate at least one command signal as a function of a determined charge parameter value,
- send said command signal to the visual indicator (42, 43) of the control panel (40), which is configured to provide the user, as a function of the received command signal, with a visual representation of the charge level of the battery (1).

12. Battery according to any one of the two preceding claims, wherein the button (41) is configured to allow the user to send a request signal to the control unit (50), wherein the control unit (50) is configured to:
- receive the request signal from the button (41),
- send said command signal to the visual indicator following the reception of the request signal.

13. Work equipment (100), optionally for the maintenance of a plot of land or garden, said work equipment (100) comprising:
- a frame (101),
- a tool (102) carried by the frame (101),
- at least one electric actuator (103) configured to move the tool (102),
- at least one battery (1) according to any one of the preceding claims, wherein said battery (1) is carried by the frame (101) and configured to electrically power at least the electric actuator (103).
